# NEUE EUROPÄISCHE PATENTSCHRIFT

(11) **EP 2 206 407 B2**
(45) Veröffentlichungstag und Bekanntmachung des Hinweises auf die Entscheidung über den Einspruch: **26.06.2024**
(45) Hinweis auf die Patenterteilung: 05.10.2011
(21) Anmeldenummer: 08844102.7
(22) Anmeldetag: 15.10.2008
(51) Int. Cl.: H05B 6/06

(54) **KOCHVORRICHTUNG**
COOKING DEVICE
DISPOSITIF DE CUISSON

(30) Priorität: 31.10.2007 ES 200702981
(43) Veröffentlichungstag der Anmeldung: 14.07.2010
(73) Patentinhaber: BSH Hausgeräte GmbH, 81739 München (DE)
(72) Erfinder: HERNANDEZ BLASCO, Pablo Jesus, 50017 Zaragoza (ES); BRAULIO MARTINEZ, Ruben, 50012 Zaragoza (ES); PALACIOS TOMAS, Daniel, 50002 Zaragoza (ES); ACERO ACERO, Jesus, 50002 Zaragoza (ES); ALONSO ESTEBAN, Rafael, 22004 Zaragoza (ES); BURDIO PINILLA, José Miguel, 50018 Zaragoza (ES); MILLAN SERRANO, Ignacio, 50018 Zaragoza (ES)
(86) Internationale Anmeldenummer: PCT/EP2008/063894
(87) Internationale Veröffentlichungsnummer: WO 2009/056452

(56) Entgegenhaltungen:
- EP-A- 0 376 760
- EP-A1- 0 498 735
- EP-A1- 0 844 807
- EP-A1- 0 926 926
- WO-A1-2006/092179
- WO-A2-2005/043737
- DE-A1- 3 217 850
- JP-A- H02 114 488
- JP-A- H05 190 263
- JP-A- H10 270 161
- JP-A- 2007 123 074
- JP-A- 2007 250 503
- US-A- 3 275 784
- US-A- 4 092 510
- US-A- 4 115 677
- US-A- 4 453 067
- US-A- 5 808 280
- US-B1- 6 528 770

## Beschreibung

Die Erfindung betrifft eine Kochvorrichtung nach Anspruch 1.

Aus der EP 0 376 760 A ist eine Kochvorrichtung mit zumindest zwei Heizeinheiten, die im Zusammenwirken eine zusammenhängende Kochzone einer Kochplatte festlegen, und einer Leistungsvorrichtung, die zur Leistungsversorgung der Heizeinheiten vorgesehen ist, bekannt.

Die Aufgabe der Erfindung besteht insbesondere darin, eine gattungsgemäße Kochvorrichtung mit verbesserten Eigenschaften hinsichtlich des Ergebnisses bei der Zubereitung einer Speise bereitzustellen.

Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Kochvorrichtung mit zumindest zwei Heizeinheiten, die im Zusammenwirken eine zusammenhängende Kochzone einer Kochplatte festlegen, und einer Leistungsvorrichtung, die zur Leistungsversorgung der Heizeinheiten vorgesehen ist.

Es wird vorgeschlagen, dass die Leistungsvorrichtung eine Differenziereinheit aufweist, die dazu vorgesehen ist, in einem differenzierten Heizmodus mit zumindest zwei Heizeinheiten eine erste positive Heizleistung für eine erste Heizeinheit von einer zweiten positiven Heizleistung für eine zweite Heizeinheit zu differenzieren. Dadurch können vorteilhafte Ergebnisse bei der Zubereitung einer Speise erreicht werden. Insbesondere kann eine an eine Geometrie eines Zubereitungsgeschirrs angepasste Leistungsverteilung in Kochbereichen, die die Kochzone spannen, erzielt werden. Unter einem Heizmodus "mit" zumindest zwei Heizeinheiten soll insbesondere ein Betriebsmodus zum Erwärmen eines in der durch die Heizeinheiten gespannten Kochzone aufgelegten Zubereitungsgeschirrs verstanden werden, der mittels zumindest zweier Heizeinheiten durchgeführt wird. Die Heizeinheiten können in diesem Betriebsmodus simultan und/oder sukzessiv mit einer Heizleistung versorgt werden. Vorteilhaft ist jedoch, dass die Leistungsvorrichtung im differenzierten Heizmodus zur simultanen Versorgung der Heizeinheiten vorgesehen ist. Außerdem soll unter einer Heizleistung "für" eine Heizeinheit insbesondere eine zu der Heizeinheit abgegebene oder eine zu der Heizeinheit abzugebende Heizleistung verstanden werden. Ferner soll unter einer "positiven Heizleistung" eine Heizleistung verstanden werden, die größer als null Watt ist.

Die Kochvorrichtung weist zumindest drei Heizeinheiten auf und der differenzierte Heizmodus ist ein Heizmodus mit zumindest drei Heizeinheiten, wodurch eine besonders flexible Anwendung einer durch die Heizeinheiten gespannten Kochzone erreicht werden kann. Eine besonders hohe Flexibilität in der Anpassung eines Betriebs der Kochvorrichtung an die Abmessungen eines Zubereitungsgeschirrs kann erreicht werden, wenn die Kochvorrichtung zumindest vier Heizeinheiten aufweist und der differenzierte Heizmodus ein Heizmodus mit zumindest vier Heizeinheiten ist.

Außerdem wird vorgeschlagen, dass die Kochvorrichtung zumindest drei zueinander konzentrisch angeordnete Heizeinheiten aufweist und die Differenziereinheit dazu vorgesehen ist, im differenzierten Heizmodus eine erste positive Heizleistung für eine erste äußere Heizeinheit von einer zweiten positiven Heizleistung für eine zweite äußere Heizeinheit zu differenzieren, wodurch besonders vorteilhafte Zubereitungsergebnisse erreicht werden können.

Unter einer "konzentrischen" Anordnung von zumindest zwei Heizeinheiten zueinander soll insbesondere eine Anordnung von zumindest zwei Heizeinheiten verstanden werden, in der eine erste Heizeinheit wenigstens eine zweite Heizeinheit zumindest im Wesentlichen umschließt. Hierbei umschließt eine erste Heizeinheit eine zweite Heizeinheit "zumindest im Wesentlichen", wenn die erste Heizeinheit die zweite Heizeinheit insbesondere um wenigstens 200°, vorteilhaft um wenigstens 270° und bevorzugt um wenigstens 340° umschließt. Vorteilhaft umschließt die erste Heizeinheit die zweite Heizeinheit vollständig. In einem Satz von konzentrischen Heizeinheiten wird eine Heizeinheit, die zumindest eine weitere Heizeinheit zumindest im Wesentlichen umschließt, als "äußere" Heizeinheit bezeichnet. Eine Heizeinheit, die von allen weiteren Heizeinheiten des Satzes zumindest im Wesentlichen umschlossen ist, d.h. die keine weitere Heizeinheit zumindest im Wesentlichen umschließt, wird "zentrale" Heizeinheit genannt. Eine Heizeinheit, die alle weiteren Heizeinheiten des Satzes zumindest im Wesentlichen umschließt, d.h. die von keiner weiteren Heizeinheit zumindest im Wesentlichen umschlossen ist, wird "äußerste" Heizeinheit genannt. Die Heizeinheiten können hierbei eine kreisförmige Form, eine spiralförmige Form, eine ellipsenförmige Form, eine ringförmige Form und/oder eine weitere, dem Fachmann als sinnvoll erscheinende Form aufweisen. In einer konzentrischen Anordnung von zumindest drei Heizeinheiten soll unter einer "intermediären" Heizeinheit insbesondere eine äußere Heizeinheit verstanden werden, die von zumindest einer weiteren Heizeinheit zumindest im Wesentlichen umschlossen ist. Eine intermediäre Heizeinheit ist zumindest von der äußersten Heizeinheit im Wesentlichen umschlossen.

In einer bevorzugten Ausführung der Erfindung wird vorgeschlagen, dass die Leistungsvorrichtung dazu vorgesehen ist, mittels der Differenziereinheit eine intermediäre Heizeinheit mit einer kleinsten positiven Heizleistung zu versorgen. Dadurch kann eine besonders vorteilhafte Temperaturverteilung in einem erwärmten Zubereitungsgeschirrboden erreicht werden.

Erfindungsgemäß ist vorgesehen, dass die Leistungsvorrichtung eine erste Leistungseinheit zur Versorgung von zumindest zwei Heizeinheiten und eine von der ersten Leistungseinheit unterschiedliche zweite Leistungseinheit aufweist, die zur Versorgung von zumindest einer dritten Heizeinheit vorgesehen ist. Durch den Einsatz von zumindest zwei Leistungseinheiten kann besonders vorteilhaft ein simultaner Betrieb von zumindest zwei Heizeinheiten erreicht werden, wodurch aufwendige und bei einem Kochbetrieb wahrnehmbare Schaltvorgänge vermieden werden können.

In diesem Zusammenhang kann der Benutzungskomfort weiter erhöht werden, wenn die erste Leistungseinheit zur simultanen Versorgung von zumindest zwei Heizeinheiten vorgesehen ist. Unter einer "simultanen" Versorgung von zwei Heizeinheiten soll insbesondere eine Versorgung verstanden werden, bei welcher die Heizeinheiten in zumindest einem Zeitraum gleichzeitig jeweils mit einer Heizleistung versorgt werden.

Des Weiteren wird vorgeschlagen, dass die Kochvorrichtung zumindest drei zueinander konzentrisch angeordnete Heizeinheiten aufweist und die erste Leistungseinheit zur Versorgung von zumindest zwei äußeren Heizeinheiten vorgesehen ist, wodurch eine an die Ausgestaltung der Kochzone vorteilhaft angepasste Schaltungstopologie erreicht werden kann.

Eine Ausführung des differenzierten Heizmodus mit einer einfachen Topologie kann dadurch erreicht werden, dass die erste Leistungseinheit erfindungsgemäß dazu vorgesehen ist, im differenzierten Heizmodus zumindest zwei Heizeinheiten mittels der Differenziereinheit mit differenzierten positiven Heizleistungen zu versorgen.

In einer weiteren Ausführung wird vorgeschlagen, dass die Differenziereinheit zumindest ein Schaltmittel aufweist, das dazu vorgesehen ist, im differenzierten Heizmodus zumindest eine der Heizeinheiten wahlweise mit der ersten oder mit der zweiten Leistungseinheit zu verbinden, wodurch eine besonders hohe Flexibilität und hohe Leistungswerte erreicht werden können.

Die erste Heizleistung und die zweite Heizleistung können im differenzierten Heizmodus konstante Leistungswerte darstellen. In einer Ausführung des differenzierten Heizmodus können sie in der Zeit variabel sein. In diesem Zusammenhang ist zum Erreichen einer vorteilhaften Temperaturverteilung von Vorteil, wenn die Differenziereinheit ein Differenziermittel aufweist, das dazu vorgesehen ist, ein zumindest im differenzierten Heizmodus festes Verhältnis zwischen der ersten und der zweiten Heizleistung vorzugeben. Durch das Differenziermittel kann eine feste Verknüpfung zwischen der ersten und der zweiten Heizleistung erreicht werden. Hierbei kann erzielt werden, dass bei einer zeitlichen Variation der ersten Heizleistung die zweite Heizleistung proportional zur ersten Heizleistung variiert, wobei der Proportionalitätsfaktor über die Zeit konstant bleibt.

Eine besonders einfache und kostengünstige Ausführung der Differenziereinheit kann erreicht werden, wenn die Differenziereinheit ein Differenziermittel aufweist, das als Kondensator ausgebildet ist.

Eine Leistungsdifferenzierung kann konstruktiv einfach erreicht werden, wenn die Differenziereinheit ein Differenziermittel aufweist, das zumindest im differenzierten Heizmodus in Reihe mit zumindest einer Heizeinheit geschaltet ist.

Es kann eine Leistungsvorrichtung mit einer hohen Anwendungsflexibilität und einer kompakten Konstruktion erreicht werden, wenn die Differenziereinheit ein Differenziermittel und ein Schaltmittel aufweist, das zu einem Ein- und Ausschalten des Differenziermittels vorgesehen ist.

Des Weiteren wird vorgeschlagen, dass das Differenziermittel in einer Abzweigung angeordnet ist, die das Schaltmittel überbrückt, wodurch eine besonders einfache Ausführung der Differenziereinheit erreicht werden kann. Hierbei kann mittels eines durch das Schaltmittels hergestellten Kurzschlusses das Differenziermittel einfach ausgeschaltet werden.

Es ist ferner von Vorteil, wenn die Differenziereinheit zumindest ein weiteres Differenziermittel aufweist, das dem Schaltmittel vorgeschaltet ist, wodurch besonders vorteilhafte Leistungsverhältnisse bei der Durchführung eines differenzierten Heizmodus mit einer hohen Flexibilität erreicht werden können. Ein Differenziermittel ist hierbei dem Schaltmittel "vorgeschaltet", wenn ein von einer Leistungseinheit ausgehender und in Richtung auf zumindest eine mit Leistung zu versorgende Heizeinheit fließender elektrischer Strom das Differenziermittel vor dem Schaltmittel erreicht.

In einer vorteilhaften Weiterbildung der Erfindung wird vorgeschlagen, dass die Leistungsvorrichtung eine Leistungseinheit mit einer Brückentopologie aufweist und die Differenziereinheit ein Differenziermittel umfasst, das in einem Brückenzweig der Leistungseinheit geschaltet ist, wodurch eine besonders einfache Schaltungstopologie erreicht werden kann.

Eine besonders vorteilhafte automatische Anpassung an die Geometrie eines zu erwärmenden Zubereitungsgeschirrs kann erreicht werden, wenn die Kochvorrichtung eine Steuereinheit aufweist, die dazu vorgesehen ist, ein Einschalten des differenzierten Heizmodus in Abhängigkeit eines Bedeckungszustands von zumindest einer Heizeinheit zu betätigen. Hierzu ist die Kochvorrichtung zweckmäßigerweise mit einem Sensormittel versehen, das in Wirkverbindung mit der Steuereinheit steht und zum Erfassen eines Bedeckungsgrads von zumindest einer Heizeinheit vorgesehen ist. Ist die Kochvorrichtung mit einem Satz von zumindest drei konzentrisch zueinander angeordneten Heizeinheiten versehen, ist die Steuereinheit vorteilhafterweise dazu vorgesehen, den differenzierten Heizmodus in Abhängigkeit eines Bedeckungszustands der äußersten Heizeinheit zu betätigen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Induktionskochfeld mit vier Kochzonen in einer Ansicht von oben,
- Fig. 2: das Induktionskochfeld in einer Schnittansicht,
- Fig. 3: eine Schaltung des Induktionskochfelds mit Heizeinheiten, Leis- tungseinheiten und einer Differenziereinheit,
- Fig. 4a: einen Heizbetrieb einer Kochzone mit zwei betriebenen Kochbe- reichen,
- Fig. 4b: die Konfiguration der Schaltung aus Figur 3 beim Heizbetrieb der Figur 4a,
- Fig. 4c: ein Zubereitungsgeschirr in der Kochzone beim Heizbetrieb der Figur 4a,
- Fig. 5a: einen Heizbetrieb der Kochzone mit drei betriebenen Kochberei- chen,
- Fig. 5b: die Konfiguration der Schaltung aus Figur 3 beim Heizbetrieb der Figur 5a,
- Fig. 5c: ein Zubereitungsgeschirr in der Kochzone beim Heizbetrieb der Figur 5a,
- Fig. 6: eine Steuereinheit, ein Sensormittel und ein Schaltmittel des In- duktionskochfelds,
- Fig. 7: eine besondere Ausführung der Schaltung aus Figur 3,
- Fig. 8: eine weitere Ausführung der Schaltung aus Figur 3 mit einem zwei Heizeinheiten vorgeschalteten Kondensator,
- Fig. 9: eine zur Ausführung aus Figur 3 alternative Schaltung mit einem wahlweise schaltbaren, einer Heizeinheit nachgeschalteten Kon- densator zur Reduzierung der Leistung der Heizeinheit,
- Fig. 10: die Schaltung aus Figur 3 mit einem einer weiteren Heizeinheit nachgeschalteten Kondensator,
- Fig. 11: eine weitere Variante der Schaltung aus Figur 3,
- Fig. 12: eine weitere Ausführung mit einer Differenziereinheit, die mit zwei Relais versehen ist,
- Fig. 13: eine weitere Ausführung mit einer Differenziereinheit, die mit drei Relais versehen ist,
- Fig. 14: eine weitere Ausführung mit einer optionalen Verbindung von zwei Leistungseinheiten,
- Fig. 15: eine Ausführungsvariante der Schaltung aus Figur 14 mit unter- schiedlichen Abzweigungspunkten,
- Fig. 16: eine Ausführungsvariante der Schaltung aus Figur 14 mit drei Re- lais,
- Fig. 17: eine weitere Ausführungsvariante einer verbundenen Topologie,
- Fig. 18: eine weitere Ausführungsvariante einer verbundenen Topologie bei der Ausführung eines nominalen Heizmodus,
- Fig. 19: die Ausführung aus Figur 18 bei der Ausführung eines "Super- boost"-Heizmodus, in welchem eine Verbindung zu weiteren Leistungseinheiten hergestellt wird,
- Fig. 20: eine Ausführungsvariante der Topologie aus Figur 18 mit einem zusätzlichen Relais,
- Fig. 21: eine Kochzone mit vier konzentrischen Kochbereichen,
- Fig. 22: eine Schaltung des Induktionskochfelds mit vier Heizeinheiten, die den Kochbereichen zugeordnet sind, mit einer Topologie gemäß der Ausführung aus Figur 3,
- Fig. 23: die Schaltung aus Figur 22 mit einer Topologie gemäß der Ausfüh- rung aus Figur 11,
- Fig. 24: die Schaltung aus Figur 22 mit einer Topologie gemäß der Ausfüh- rung aus Figur 12 und
- Fig. 25: die Schaltung aus Figur 22 mit einer Topologie gemäß der Ausfüh- rung aus Figur 13.

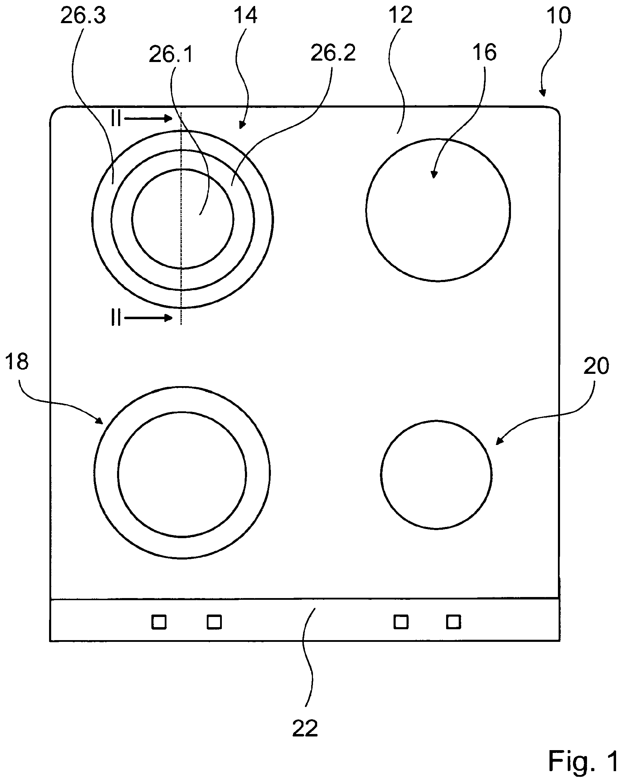

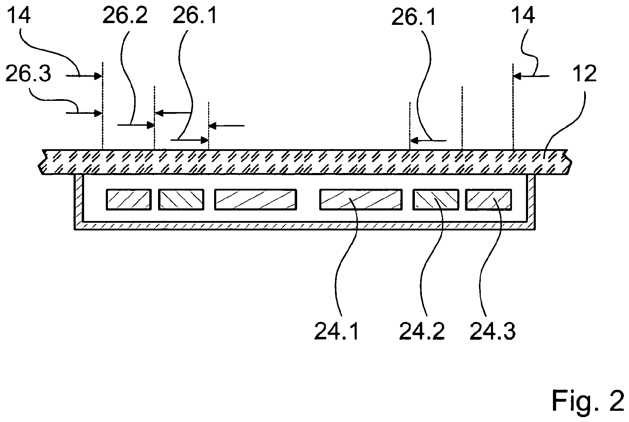

Figur 1 zeigt eine als Induktionskochfeld ausgebildete Kochvorrichtung 10 in einer Ansicht von oben. Diese weist eine als Keramikplatte ausgebildete Kochplatte 12 zum Auflegen von Zubereitungsgeschirren auf. Die Oberfläche der Kochplatte 12 umfasst vier Kochzonen 14, 16, 18, 20, die jeweils einem zum Erwärmen eines Zubereitungsgeschirrs geeigneten, zusammenhängenden Teilbereich der Kochplatte entsprechen. Hierzu bedecken die Kochzonen 14, 16, 18, 20 jeweils zumindest eine Heizeinheit der Kochvorrichtung 10 in vertikaler Richtung nach oben (siehe Figur 2). Die Kochzonen 14 bis 20 sind jeweils kreisförmig ausgebildet. Die Kochvorrichtung 10 weist ferner eine Bedieneinheit 22 auf, die zum Starten, Stoppen und/oder Einstellen eines Heizmodus durch einen Bediener vorgesehen ist.

In diesem Text beziehen sich die Begriffe "vertikal", "nach oben" usw. auf die Stellung der Kochvorrichtung 10, in welcher sie von einem Endbenutzer unter vorschriftsgemäßen Anwendungsbedingungen bedient wird.

In Figur 2 ist die Kochvorrichtung 10 im Bereich der Kochzone 14 in einer Schnittansicht entlang einer Linie II-II in Figur 1 dargestellt. Die Kochzone 14 bedeckt einen Satz von drei Heizeinheiten 24.1, 24.2, 24.3 in vertikaler Richtung nach oben. Die Heizeinheiten 24 sind jeweils als Induktionsspulen ausgebildet, die auf bekannte Weise zum Anregen von ohmschen Verlusten im Boden eines in der Kochzone 14 aufgelegten Zubereitungsgeschirrs vorgesehen sind. In einer alternativen Ausführung der Kochvorrichtung 10 können die Heizeinheiten 24 jeweils als Heizwiderstand ausgebildet sein. Die Heizeinheiten 24 sind zueinander konzentrisch angeordnet und spannen die zusammenhängende Kochzone 14. Hierbei umschließen zwei äußere Heizeinheiten 24.2, 24.3 eine zentrale Heizeinheit 24.1. Eine äußerste Heizeinheit 24.3 umschließt die zentrale Heizeinheit 24.1 und eine intermediäre Heizeinheit 24.2, die in Radialrichtung der Kochzone 14 zwischen der zentralen Heizeinheit 24.1 und der äußersten Heizeinheit 24.3 angeordnet ist. Die Heizeinheiten 24 spannen jeweils einen unterschiedlichen Kochbereich 26 der Kochzone 14. Die Kochbereiche 26 sind zueinander konzentrisch angeordnet. Ein äußerster Kochbereich 26.3 bedeckt die äußerste Heizeinheit 24.3 in vertikaler Richtung nach oben und umschließt einen intermediären Kochbereich 26.2 und einen zentralen Kochbereich 26.1. Der intermediäre Kochbereich 26.2 bedeckt die intermediäre Heizeinheit 24.2 in vertikaler Richtung nach oben und umschließt den zentralen Kochbereich 26.1, welcher die zentrale Heizeinheit 24.1 in vertikaler Richtung nach oben bedeckt. Der intermediäre Kochbereich 26.2 ist somit in Radialrichtung der Kochzone 14 zwischen dem zentralen Kochbereich 26.1 und dem äußersten Kochbereich 26.3 angeordnet. Der zentrale Kochbereich 26.1, der den Mittelpunkt der Kochzone 14 einschließt, ist kreisförmig ausgebildet. Der intermediäre Kochbereich 26.2 erstreckt sich ringförmig um den zentralen Kochbereich 26.1 und der äußerste Kochbereich 26.3 erstreckt sich ringförmig um den intermediären Kochbereich 26.2 (siehe auch Figur 1). Die Kochbereiche 26 grenzen aneinander an, so dass sie eine zusammenhängende Kochzone 14 bilden. In einer vorteilhaften Ausführung können die Kochbereiche 26 beispielhaft folgende Abmessungen aufweisen: Der Kochbereich 26.1 kann einen Durchmesser von 210 mm aufweisen, die Kochbereiche 26.1 und 26 .2 können im Zusammenwirken eine kreisförmige Zone mit einem Durchmesser von 260 mm bilden, und die Kochbereiche 26.1 bis 26.3 können im Zusammenwirken einer Zone entsprechen, die einen Durchmesser von 320 mm aufweist.

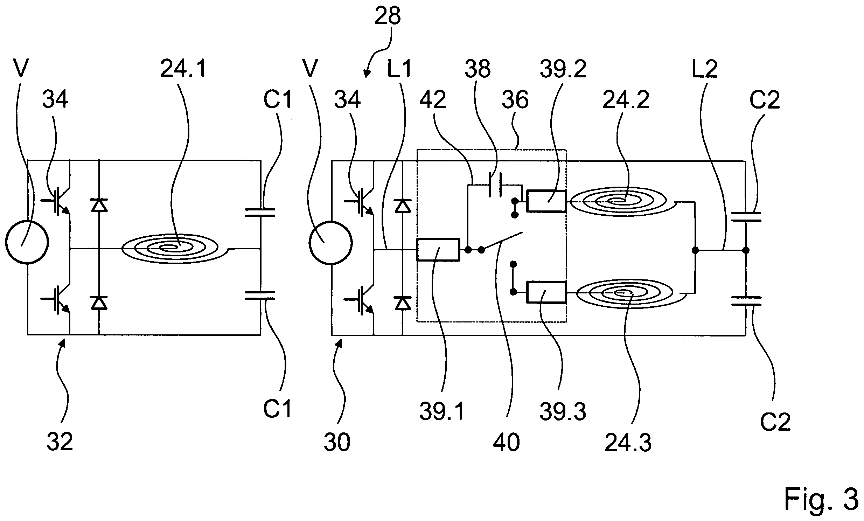

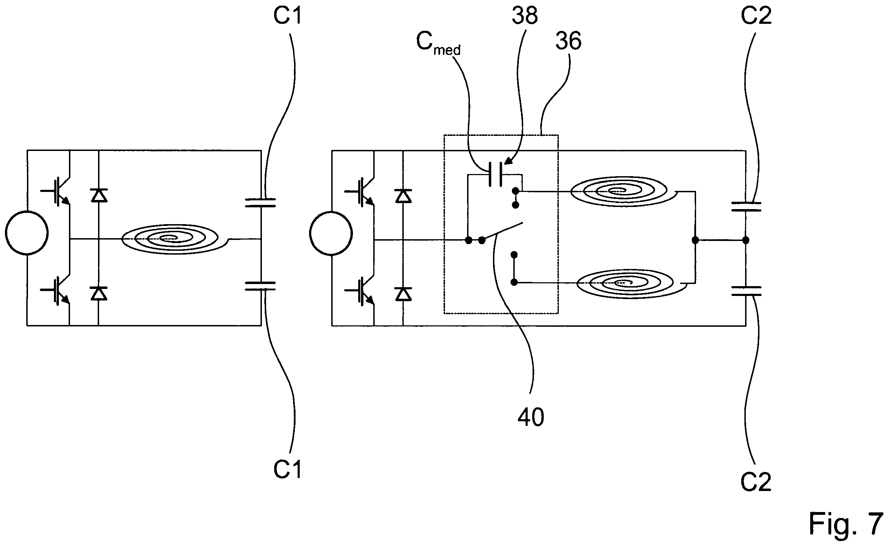

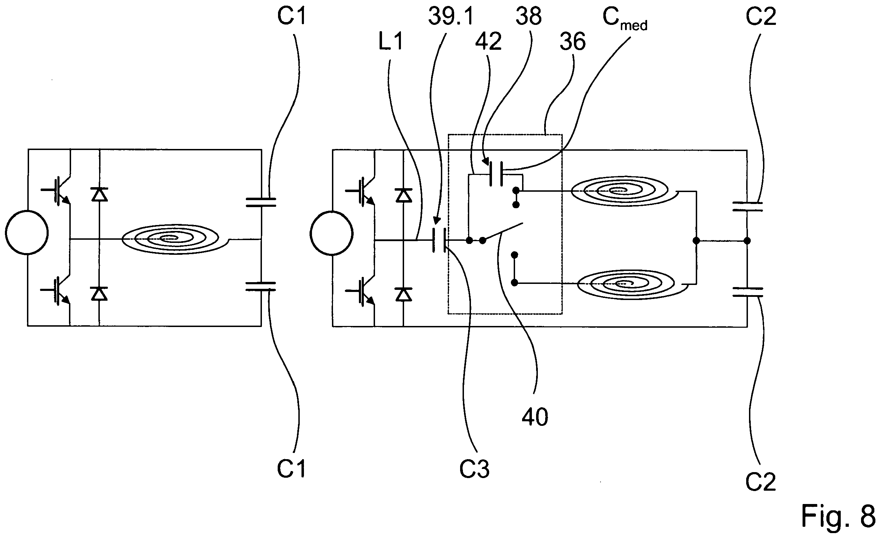

Figur 3 zeigt eine Schaltung der Kochvorrichtung 10. Diese Schaltung weist die Heizeinheiten 24.1, 24.2, 24.3 und eine Leistungsvorrichtung 28 auf, die zur Leistungsversorgung der Heizeinheiten 24 vorgesehen ist. Die Leistungsvorrichtung 28 weist zwei Leistungseinheiten 30, 32 auf, die jeweils als Umrichter ausgebildet sind. Hierbei weisen die Leistungseinheiten 30, 32 jeweils als Transistor ausgebildete Schaltelemente 34 auf, die auf bekannte Weise ausgehend von einer gleichgerichteten Spannung, die in den Zeichnungen mit dem Bezugszeichen V bezeichnet wird, einen Wechselstrom zum Einspeisen in die Heizeinheiten 24 erzeugen. Die Schaltelemente 34 sind z.B. als IGBT (insulated-gate bipolar transistor oder Bipolartransistor mit isolierter Gateelektrode) ausgebildet. Weitere, dem Fachmann als sinnvoll erscheinende Schaltelemente 34 sind denkbar. Eine erste Leistungseinheit 30 ist zur Leistungsversorgung der äußeren Heizeinheiten 24.2 und 24.3 vorgesehen. Die Leistungseinheit 30 und die Heizeinheiten 24.2, 24.3 sind in einer Brückentopologie angeordnet, wobei die Heizeinheiten 24.2 und 24.3 in einem gemeinsamen Brückenzweig angeordnet sind. Zusätzlich zur Leistungseinheit 30 und von der Leistungseinheit 30 getrennt ausgebildet ist eine Leistungseinheit 32 zur Leistungsversorgung der zentralen Heizeinheit 24.1 vorgesehen. Die Leistungsvorrichtung 28 weist eine Differenziereinheit 36 auf, deren Funktionsweise unten näher beschreiben wird. Die Differenziereinheit 36 weist ein als Kondensator ausgebildetes Differenziermittel 38 auf. Ferner kann die Differenziereinheit 36 optional weitere Differenziermittel 39 aufweisen, die in Figur 3 mittels eines Rechtecks schematisch dargestellt sind. Ein Rechteck stellt jeweils einen Impedanzwert dar, der durch einen weiteren Kondensator, eine Induktivität, einen Widerstand oder durch eine Kombination dergleichen gegeben sein kann. Es sind zwei besondere Ausführungen der Schaltung aus Figur 3 in den Figuren 7 und 8 dargestellt. Wie einem Vergleich der Figuren 3 und 7 zu entnehmen ist, kann ein Rechteck in Figur 3 auch einen Kurzschluss darstellen. Die Leistungseinheit 30, die Differenziereinheit 36 und die Heizeinheiten 24.2, 24.3 sind in einer Brückentopologie angeordnet. Die Heizeinheiten 24.2, 24.3 und die Differenziereinheit 36 sind hierbei in einem Brückenzweig der Brückentopologie angeordnet. Der Brückenzweig weist eine zentrale Leitung L1 auf, die sich an die Leistungseinheit 30 zwischen zwei Schaltelementen 34 anschließt. Die zentrale Leitung L1 teilt sich in zwei parallele Verzweigungen, in welchen jeweils eine der Heizeinheiten 24.2, 24.3 angeordnet ist. Die parallelen Verzweigungen vereinigen sich in eine zentrale Leitung L2, die sich an einen Kondensatorzweig zwischen zwei Kondensatoren C2 anschließt, die mit den Schaltelementen 34 verbunden sind. Die Differenziereinheit 36 umfasst ferner ein Schaltmittel 40, das z.B. als Relais ausgebildet sein kann und dazu dient, die zentrale Leitung L1 wahlweise mit einer der parallelen Verzweigungen des Brückenzweigs zu verbinden. Das als Kondensator ausgebildete Differenziermittel 38 ist in einer Abzweigung 42 angeordnet, welche die zentrale Leitung L1 mit der Verzweigung verbindet, in welcher die Heizeinheit 24.2 angeordnet ist, und überbrückt hierbei das Schaltmittel 40, so dass die zentrale Leitung L1 permanent mit dieser Verzweigung über das Differenziermittel 38 elektrisch verbunden ist. Die Leistungseinheit 32 und die Heizeinheit 24.1 sind ebenfalls in einer Brückentopologie mit einem Brückenzweig angeordnet, in welchem die Heizeinheit 24.1 geschaltet ist. Der Brückenzweig schließt sich an die Leistungseinheit 32 zwischen zwei Schaltelementen 34 und an einen Kondensatorzweig zwischen zwei Kondensatoren C1, die mit den Schaltelementen 34 verbunden sind, an.

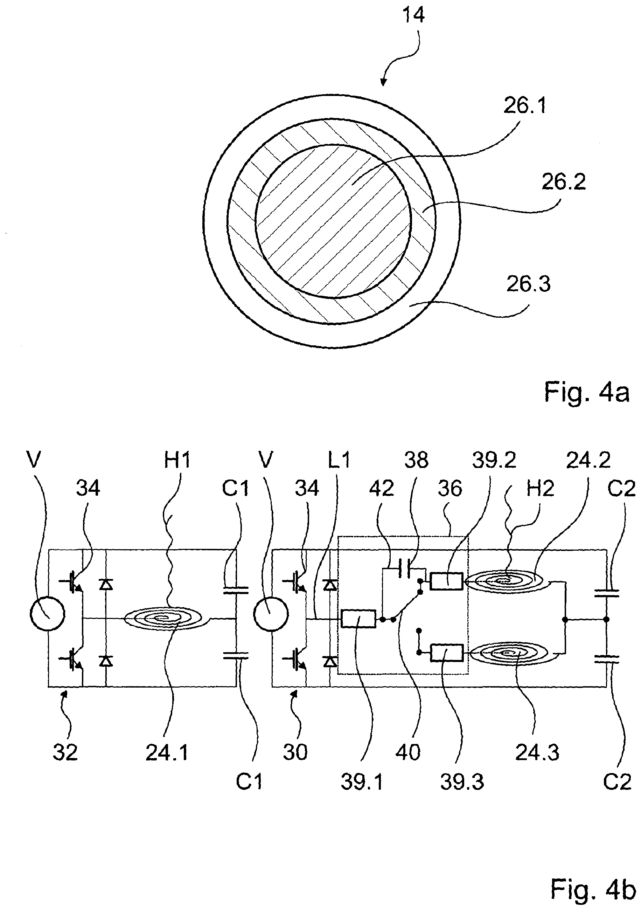

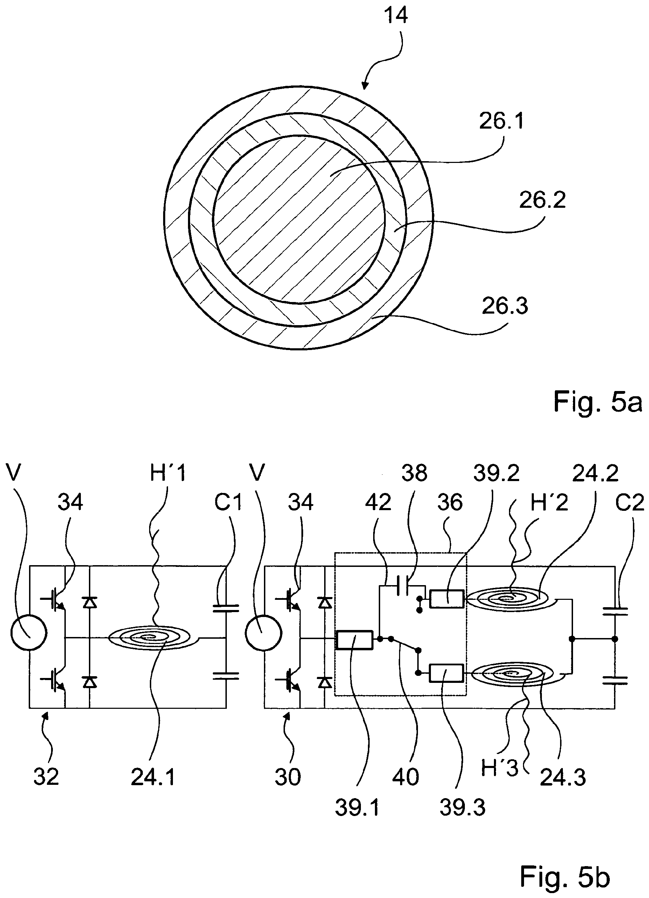

Mittels der Leistungsvorrichtung 28 und insbesondere durch das Schaltmittel 40 der Differenziereinheit 36 können zumindest zwei Heizmodi zum Betreiben der Kochzone 14 durchgeführt werden. Dies wird anhand der Figuren 4a, 4b, 5a und 5b beschrieben.

In einem ersten Heizmodus werden die zentrale Heizeinheit 24.1 und die intermediäre Heizeinheit 24.2 simultan mit Heizleistung versorgt. Hierbei wird die zentrale Heizeinheit 24.1 mittels der Leistungseinheit 32 mit einer ersten positiven Heizleistung H1 versorgt. Die intermediäre Heizeinheit 24.2 wird mittels der Leistungseinheit 30 mit einer Heizleistung H2 versorgt, während die Heizeinheit 24.3 unbetrieben verbleibt. Dies ist in den Figuren 4a und 4b dargestellt. In den Figuren 4a und 5a entspricht ein schraffierter Kochbereich jeweils einem Kochbereich, der eine betriebene Heizeinheit bedeckt. Hierbei ist das Schaltmittel 40, das z.B. als Relais ausgebildet ist, in eine in Figur 4b gezeigte Schaltposition gebracht, bei welcher ein ausschließlich die Heizeinheit 24.2 einschließender Stromkreis geschlossen wird. Dieser ist von der Heizeinheit 24.2, einem der Kondensatoren C2, einem Schaltelement 34 und ggf. von einem weiteren Differenziermittel 39.1 und/oder 39.2 gebildet. Die durch das Schaltmittel 40 hergestellte Verbindung der zentralen Leitung L1 mit der Verzweigung der Heizeinheit 24.2 stellt relativ zur Abzweigung 42 einen Kurzschluss dar, so dass elektrischer Strom ausschließlich durch das Schaltmittel 40 in die Heizeinheit 24.2 oder aus der Heizeinheit 24.2 fließt. Das Differenziermittel 38 befindet sich hierbei in einem ausgeschalteten Zustand. In der in Figur 4b gezeigten Schaltposition des Schaltmittels 40 ist ferner ein die äußerste Heizeinheit 24.3 einschließender Stromkreis geöffnet, wodurch die Heizeinheit 24.3 sich in einem unbetriebenen Zustand befindet.

Ein zweiter Heizmodus, unten auch differenzierter Heizmodus genannt, ist anhand der Figuren 5a und 5b beschrieben. Wie der Figur 5a zu entnehmen ist, entspricht der differenzierte Heizmodus einem Heizmodus mit den drei Heizeinheiten 24.1 bis 24.3. Im differenzierten Heizmodus werden die Heizeinheiten 24.1 bis 24.3 simultan mit Heizleistung versorgt. Die Leistungseinheit 32 erzeugt eine positive Heizleistung H'1 für die zentrale Heizeinheit 24.1. Im differenzierten Heizmodus werden die äußeren Heizeinheiten, und zwar die intermediäre Heizeinheit 24.2 und die äußerste Heizeinheit 24.3, gemeinsam und simultan von der Leistungseinheit 30 mit Heizleistung versorgt. Die intermediäre Heizeinheit 24.2 wird mit einer positiven Heizleistung H'2 versorgt und die äußerste Heizeinheit 24.3 wird mit einer positiven Heizleistung H'3 versorgt. In der in Figur 5b gezeigten Schaltposition des Schaltmittels 40 ist das Differenziermittel 38 in einem eingeschalteten Zustand, indem es über die Abzweigung 42 in Reihe mit der Heizeinheit 24.2 geschaltet ist. Wie einem Vergleich der Figuren 4b und 5b zu entnehmen ist, dient das Schaltmittel 40 dazu, zwischen einer ersten Topologie, in welcher das Differenziermittel 38 ausgeschaltet ist, und einer zweiten Topologie, in welcher das Differenziermittel 38 eingeschaltet ist, umzuschalten. In der Konfiguration der Figur 5b schließt das Schaltmittel 40 einen im Brückenzweig angeordneten Stromkreis, der das Differenziermittel 38 und die Heizeinheiten 24.2, 24.3 aufweist.

Das Differenziermittel 38 der Differenziereinheit 36 dient dazu, bei der Ausführung des differenzierten Heizmodus die positiven Heizleistungen H'2 und H'3 voneinander zu differenzieren. Insbesondere ist die Leistungsvorrichtung 28 dazu vorgesehen, mittels der Differenziereinheit 36 die intermediäre Heizeinheit 24.2 mit einer gegenüber der Heizleistung H'3 kleineren Heizleistung H'2 zu versorgen: Mit Hilfe des Differenziermittels 38, das im differenzierten Heizmodus als ein in Reihe mit der Heizeinheit 24.2 geschalteter Kondensator ausgebildet ist, wird die intermediäre Heizeinheit 24.2 mit der Heizleistung H'2 versorgt, die kleiner als die Heizleistung H'3 ist, mit welcher die äußerste Heizeinheit 24.3 versorgt wird. Das Differenziermittel 38 gibt hierbei ein Verhältnis zwischen der Heizleistung H'3 der äußersten Heizeinheit 24.3 und der Heizleistung H'2 der intermediären Heizeinheit 24.2 vor, welches bei der Durchführung des differenzierten Heizmodus fest verbleibt. Dieses Verhältnis kann ferner durch die Wahl der Impedanzwerte der weiteren Differenziermittel 39 fixiert werden. Das Verhältnis bleibt während der Ausführung des differenzierten Heizmodus bestehen, und zwar unabhängig von der von der Leistungseinheit 30 angegebenen Gesamtleistung. In einer alternativen Ausführungsvariante ist denkbar, dass die Differenziereinheit 36 ein Differenziermittel 38 aufweist, das als variabler Kondensator ausgebildet ist.

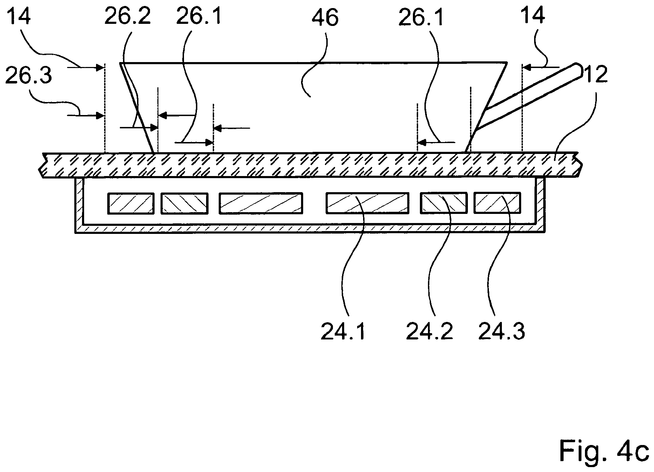

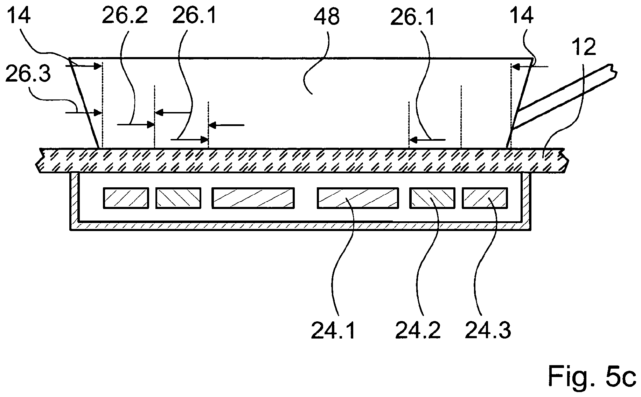

Die Figuren 4c und 5c entsprechen der Schnittansicht der Figur 2, wobei jeweils ein Zubereitungsgeschirr 46 (Figur 4c) bzw. 48 (Figur 5c) in der Kochzone 14 aufgelegt ist. Wie diesen Figuren zu entnehmen ist, eignen sich die oben beschriebenen Heizmodi zum Erwärmen von Zubereitungsgeschirren unterschiedlicher Dimensionen. Im Beispiel der Figur 4c ist ein Zubereitungsgeschirr 46 in der Kochzone 14 aufgelegt, wobei der Zubereitungsgeschirrboden den zentralen Kochbereich 26.1 und den intermediären Kochbereich 26.2 bedeckt und die Leistungsvorrichtung 28 im ersten Heizmodus betrieben wird. Im Beispiel der Figur 5c bedeckt der Zubereitungsgeschirrboden eines Zubereitungsgeschirrs 48 die drei Kochbereiche 26.1 bis 26.3, wobei die Leistungsvorrichtung 28 im differenzierten Heizmodus mit den drei Heizeinheiten 24.1 bis 24.3 betrieben wird.

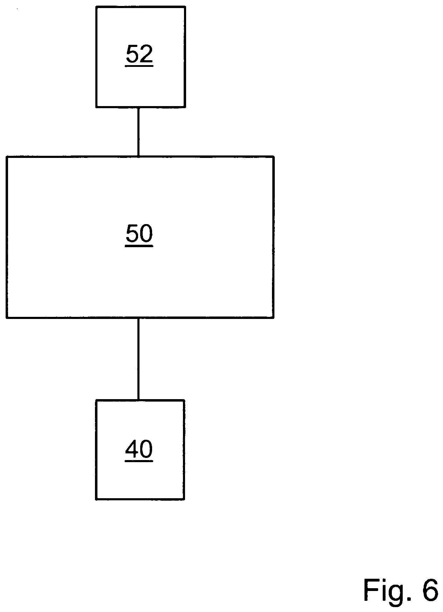

Der differenzierte Heizmodus wird abhängig von einem Bedeckungszustand der äußersten Heizeinheit 24.3 eingeschaltet. Dies ist anhand von Figur 6 beschrieben. Figur 6 zeigt eine Schaltung der Kochvorrichtung 10 in einer schematischen Ansicht. Das Einschalten des differenzierten Heizmodus erfolgt mittels einer Steuereinheit 50, die in Wirkverbindung mit dem Schaltmittel 40 der Differenziereinheit 36 steht. Die Steuereinheit 50 steht ferner in Wirkverbindung mit einem Sensormittel 52, das dazu vorgesehen ist, einen Bedeckungsgrad einer Heizeinheit, und zwar in diesem Beispiel insbesondere der äußersten Heizeinheit 24.3, zu erfassen. Das Sensormittel 52 kann beispielsweise ein induktives Mittel sein. Insbesondere kann das Sensormittel 52 der als Induktionsspule ausgebildeten Heizeinheit 24.3 entsprechen. Hierbei kann mittels eines durch die Heizeinheit 24.3 angeregten magnetischen Felds überprüft werden, ob der Kochbereich 26.3 durch ein zu einem induktiven Kochbetrieb geeignetes Zubereitungsgeschirr bedeckt ist. Wird dies erkannt, so wird von der Steuereinheit 50 ein Steuersignal an das Schaltmittel 40 übertragen, welches das Schaltmittel 40 betätigt. Hierbei wird das Schaltmittel 40 in die in Figur 5b gezeigte Schaltposition gebracht, bei welcher das Differenziermittel 38 eingeschaltet ist und die Heizeinheiten 24.2, 24.3 jeweils mit einer unterschiedlichen Heizleistung betrieben werden. Dadurch, dass im differenzierten Heizmodus die intermediäre Heizeinheit 24.2 mit einer kleineren Heizleistung H'2 als die Heizleistung H'3 der äußersten Heizeinheit 24.3 betrieben wird, kann eine uniforme Temperaturverteilung im Zubereitungsgeschirrboden des Zubereitungsgeschirrs 48 erreicht werden. Dies geht aus der Tatsache hervor, dass der äußere Rand des Zubereitungsgeschirrs 48 eine Wärmesenke fingiert, wodurch der Randbereich des Zubereitungsgeschirrs 48 einer größeren Heizleistung als der intermediäre Bereich bedarf. Im differenzierten Heizmodus können die äußerste Heizeinheit 24.3 und die zentrale Heizeinheit 24.1 mit einer gleichen Heizleistung H'1 = H'3 betrieben werden.

In den Figuren 7 bis 24 sind Ausführungen von Schaltungen der Kochvorrichtung 10, die zur Versorgung der Heizeinheiten 24 dienen, dargestellt. Grundsätzlich gilt die Beschreibung der Figuren 1 bis 7 für diese weiteren Ausführungen. Um Wiederholungen zu vermeiden, werden im Folgenden ggf. nur die Unterschiede zur Ausführung aus Figur 3 beschrieben. Für gleich bleibende Bauteile werden keine neuen Bezugszeichen vergeben.

Figur 7 zeigt eine spezielle Ausführung der Schaltung aus Figur 3. In dieser Ausführung umfasst die Differenziereinheit 36 ausschließlich das Differenziermittel 38, welches auch als Kondensator C_{med} bezeichnet ist, und das Schaltmittel 40. Beispielhaft sind folgende Werte für die einzelnen Funktionsbauteile denkbar: C1 = 720 nF, C2 = 720 nF und C_{med} = 90 nF. Im betrachteten Beispiel wird mittels des Differenziermittels 38 die intermediäre Heizeinheit 24.2 mit der Heizleistung H'2 versorgt, die 30 % der von der Leistungseinheit 30 erzeugten gesamten Heizleistung entspricht, während die äußerste Heizeinheit 24.3 mit der Heizleistung H'3 versorgt wird, die 70 % der von der Leistungseinheit 30 erzeugten gesamten Heizleistung entspricht. Weitere, dem Fachmann als sinnvoll erscheinende Werte der Heizleistungen H'2 und H'3 sind denkbar.

In Figur 8 ist eine weitere Ausführung der Schaltung aus Figur 3 dargestellt. Hierbei ist das Differenziermittel 39.1, das im Brückenzweig, und zwar insbesondere in der zentralen Leitung L1 dem Schaltmittel 40 vorgeschaltet und in Reihe mit den parallelen Verzweigungen der Heizeinheiten 24.2, 24.3 geschaltet ist, als ein Kondensator C3 ausgebildet. Die folgende Konfiguration der Schaltung ist denkbar: C1 = 720 nF, C2 = 720 nF, C_{med} = 90 nF und C3 = 1440 nF. Hier und im gesamten Text beziehen sich die Begriffe "vorgeschaltet" und "nachgeschaltet" auf eine Richtung, die durch einen Stromverlauf im Brückenzweig ausgehend von den Schaltelementen 34 in Richtung zu den Kondensatoren C2 gegeben ist. Das Differenziermittel 39.1 ist vor dem Abzeigungspunkt der Abzweigung 42 angeordnet, so dass es beiden Heizeinheiten 24.2, 24.3 zugeordnet ist, während das Differenziermittel 38, das in der Abzweigung 42 angeordnet ist, der Heizeinheit 24.2 zugeordnet ist.

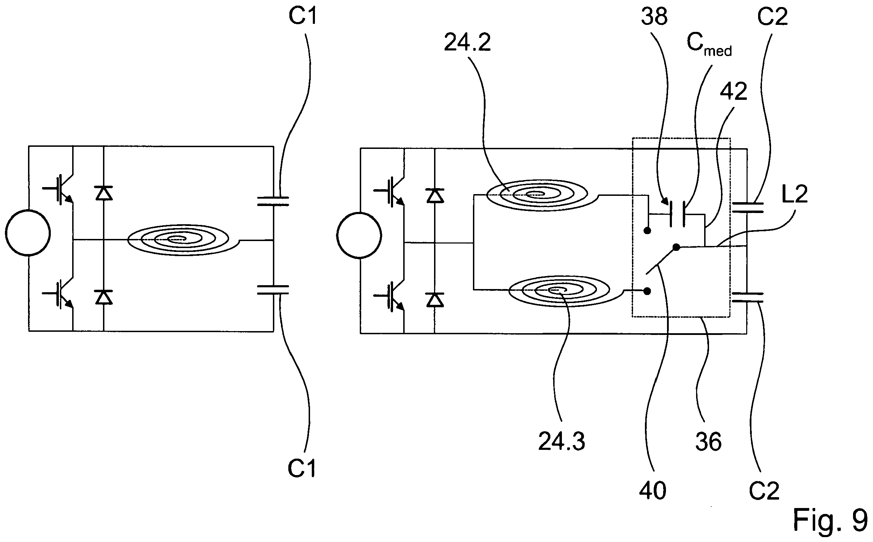

Figur 9 zeigt eine alternative Ausführung der Schaltung der Kochvorrichtung 10. Im Vergleich zur Ausführung aus Figur 7 ist die Differenziereinheit 36 den Heizeinheiten 24.2, 24.3 nachgeschaltet. Hierbei schließt sich die Differenziereinheit 36 an die zentrale Leitung L2 an und sie ist zwischen den parallelen Verzweigungen mit den Heizeinheiten 24.2, 24.3 und dem Kondensatorzweig mit den Kondensatoren C2 angeordnet. Die Abzweigung 42 verbindet die Verzweigung der Heizeinheit 24.2 direkt mit der zentralen Leitung L2 und überbrückt das Schaltmittel 40.

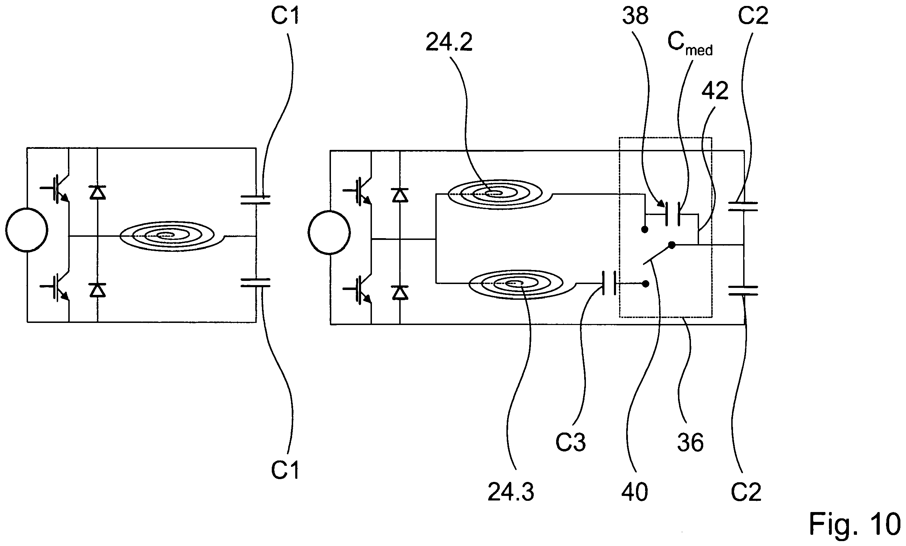

Figur 10 zeigt eine weitere Ausführung einer Schaltung, in welcher die Differenziereinheit 36 wie in Figur 9 ebenfalls den Heizeinheiten 24.2, 24.3 nachgeschaltet ist. Im Vergleich zu Figur 9 weist die Differenziereinheit 36 zusätzlich ein als Kondensator C3 ausgebildetes Differenziermittel auf. Dieses ist in der parallelen Verzweigung, die der Heizeinheit 24.3 zugeordnet ist, angeordnet und der Heizeinheit 24.3 nachgeschaltet. In diesem Beispiel sind die folgenden Werte der einzelnen Funktionsbausteine vorteilhaft: C1 = 720 nF, C_{med} = 90 nF, C2 = 540 nF und C3 = 1080 nF.

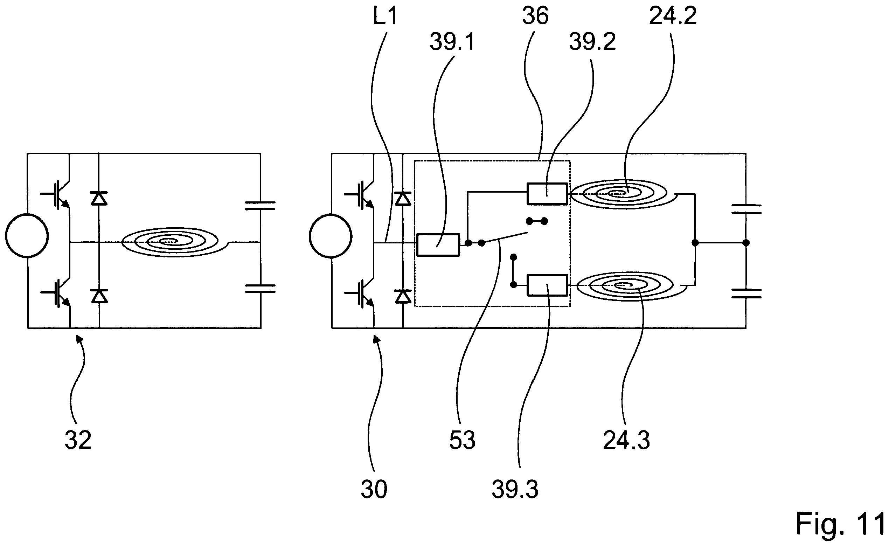

In Figur 11 ist eine weitere Ausführung einer Schaltung gezeigt. Hierbei entspricht die Differenziereinheit 36 der Ausführung aus Figur 3, mit dem Unterschied, dass auf das Differenziermittel 38 verzichtet wird. Im gezeigten Beispiel ist die Verzweigung der Heizeinheit 24.2 permanent mit der zentralen Leitung L1 und hierdurch mit der Leistungseinheit 30 elektrisch verbunden. Die Differenziereinheit 36 weist in der gezeigten Ausführung ein Schaltmittel 53 auf, das in der der Heizeinheit 24.3 zugeordneten Verzweigung angeordnet ist und zum Ein- und Ausschalten der Heizeinheit 24.3 dient. Dieses Schaltmittel 53, welches z.B. als Relais ausgebildet sein kann, ist nach dem Abzweigungspunkt der der Heizeinheit 24.2 zugeordneten Verzweigung angeordnet, so dass diese Verzweigung permanent mit der Leitung L1 und dadurch mit der Leistungseinheit 30 verbunden ist. Das Verhältnis der Heizleistungen H'2 und H'3 im differenzierten Heizmodus der Heizeinheiten 24.2 und 24.3 ist durch die Wahl der Werte der Differenziermittel 39.1, 39.2 und 39.3 gegeben. Hierbei sind diese Werte derart gewählt, dass die Heizleistung H'2 im differenzierten Heizmodus kleiner als die Heizleistung H'3 ist.

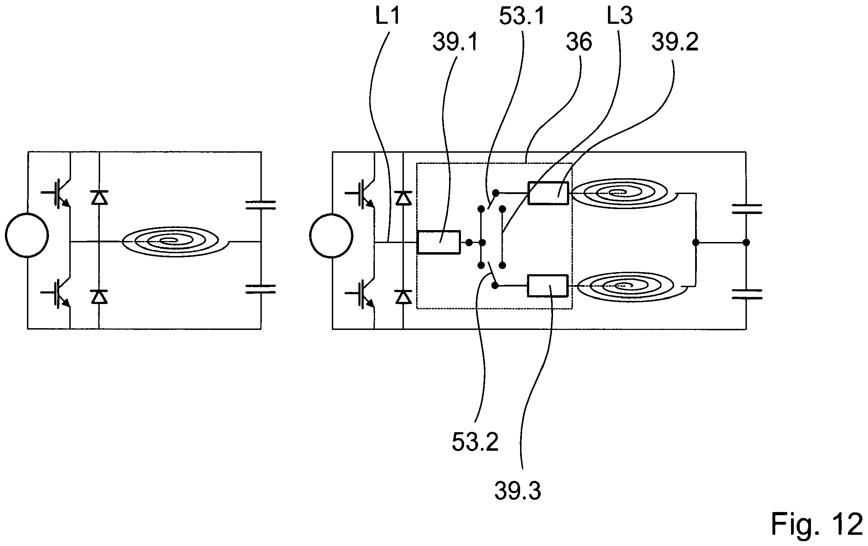

Des Weiteren ist eine weitere Ausführung denkbar, die in Figur 12 dargestellt ist. Diese entspricht der Ausführung aus Figur 11, mit dem Unterschied, dass in der der Heizeinheit 24.2 zugeordneten Verzweigung ebenfalls ein z.B. als Relais ausgebildetes Schaltmittel 53.1 angeordnet ist. Das Schaltmittel, welches zum Ein- und Ausschalten der Heizeinheit 24.3 dient und schon in Figur 11 zu sehen ist, ist hier mit dem Bezugszeichen 53.2 bezeichnet. Die Schaltmittel 53.1, 53.2 dienen dazu, die Heizeinheiten 24.1, 24.2 von der zentralen Leitung L1 zu trennen. Ferner ist eine Verbindungsleitung L3 vorgesehen, die dazu dient, die Heizeinheiten 24.2, 24.3 miteinander in Reihe zu schalten, wenn beide Heizeinheiten 24.2, 24.3 von der zentralen Leitung L1 getrennt sind. Wie in der Ausführung aus Figur 11 ist das Verhältnis der Heizleistung H'2 und H'3 im differenzierten Heizmodus durch die Dimensionierung der Differenziermittel 39.1 bis 39.3 gegeben.

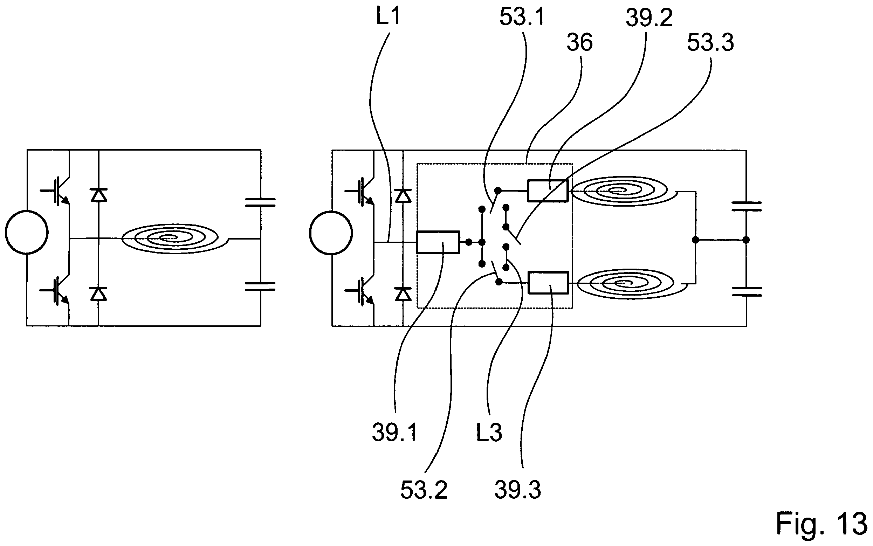

Figur 13 zeigt eine weitere Ausführung der Schaltung, die im Wesentlichen der Ausführung aus Figur 12 entspricht. Zusätzlich ist in der Verbindungsleitung L3 ein weiteres Schaltmittel 53.3 vorgesehen, das dazu dient, die Verbindungsleitung L3 wahlweise zu unterbrechen.

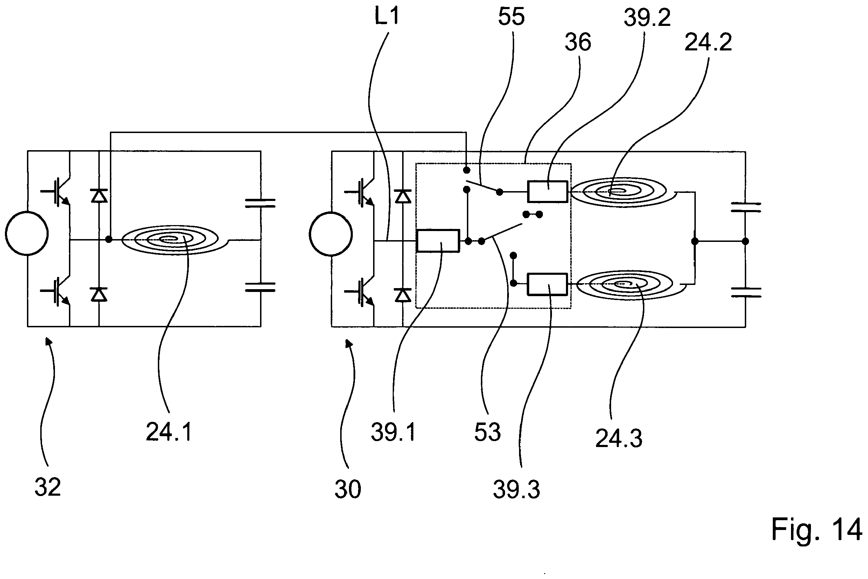

Die Figuren 14 bis 20 zeigen weitere Ausführungen einer Schaltung für die Kochvorrichtung 10, in welchen die Leistungseinheiten 30 und 32 miteinander verbunden sind.

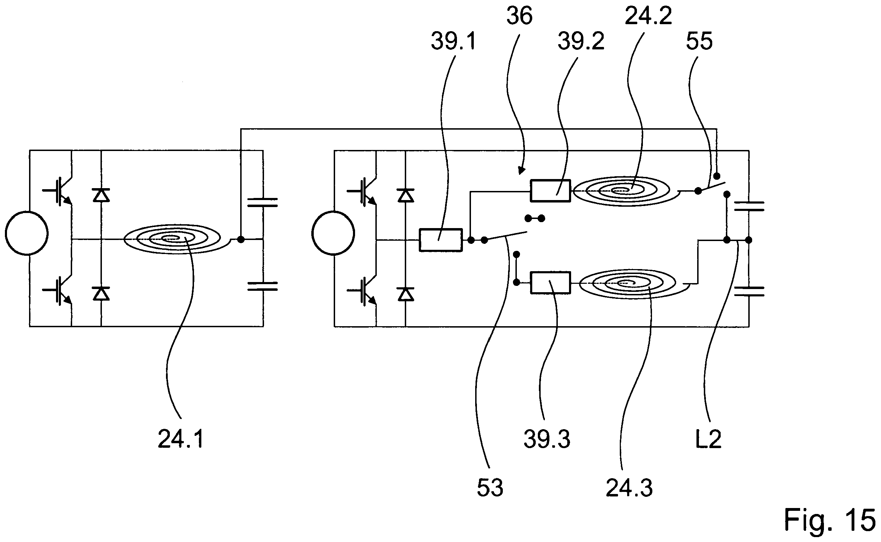

Die Ausführung gemäß Figur 14 entspricht im Wesentlichen der Ausführung aus Figur 11. Im gezeigten Beispiel weist die Schaltung das Unterscheidungsmerkmal auf, dass in der der Heizeinheit 24.2 zugeordneten Verzweigung ein weiteres Schaltmittel der Differenziereinheit 36, z.B. in der Form eines Relais, angeordnet ist. Dieses Schaltmittel ist in der Figur mit dem Bezugszeichen 55 bezeichnet, während das andere Schaltmittel, das wie in Figur 11 in der der Heizeinheit 24.3 zugeordneten Verzweigung angeordnet ist, weiterhin mit dem Bezugszeichen 53 bezeichnet ist. Das Schaltmittel 55 dient dazu, zwischen einer ersten Konfiguration, in welcher die Heizeinheit 24.2 mit der zentralen Leitung L1 verbunden ist, und einer zweiten Konfiguration, in welcher die Heizeinheit 24.2 mit der Leistungseinheit 32 verbunden ist, umzuschalten. Die Verbindung zur Leistungseinheit 32 erfolgt über eine Leitung, die vom Brückenzweig abgezweigt ist, in welchem die Heizeinheit 24.1 angeordnet ist, wobei der Abzweigungspunkt der Heizeinheit 24.1 vorgeschaltet ist. Die Differenzierung in den Heizleistungen H'2 und H'3 im differenzierten Heizmodus kann, wie oben beschrieben, durch die Wahl der Dimensionierung der Differenziermittel 39 festgelegt werden. Ferner kann alternativ oder zusätzlich die Differenzierung dadurch erreicht werden, dass die Heizeinheiten 24.2 und 24.3 durch eine unterschiedliche Leistungseinheit 32 bzw. 30 mit Leistung versorgt werden, wobei die Leistungseinheiten 30, 32 beispielsweise eine unterschiedliche nominale Leistung aufweisen. Dieses Prinzip der Differenzierung mit Hilfe von gezielt dimensionierten Differenziermitteln 39 und/oder von Schaltmitteln 55 zur wahlweisen Verbindung von zumindest einer Heizeinheit 24.2 und/oder 24.3 mit unterschiedlichen Leistungseinheiten 30,32 kann mit verschiedenen Topologien verwirklicht werden, wie die Ausführungen der Figuren 15 bis 17 zeigen.

In Figur 15 ist eine weitere Ausführung zu sehen, die an die in Figur 11 gezeigte Topologie angelehnt ist. Die Schaltung gemäß Figur 15 unterscheidet sich von der Ausführung gemäß Figur 11 dadurch, dass in der der Heizeinheit 24.2 zugeordneten Verzweigung ein weiteres Schaltmittel, in der Figur mit dem Bezugszeichen 55 bezeichnet, der Heizeinheit 24.2 nachgeschaltet angeordnet ist. Dieses Schaltmittel 55 dient dazu, zwischen einer ersten Konfiguration, in welcher die Heizeinheit 24.2 mit der zentralen Leitung L2 verbunden ist, und einer zweiten Konfiguration umzuschalten, in welcher die Heizeinheit 24.2 mit dem Brückenzweig, in welchem die Heizeinheit 24.1 angeordnet ist, verbunden ist. Die Verbindung zu diesem Brückenzweig erfolgt über eine Leitung, die vom Brückenzweig abgezweigt ist, wobei der Abzweigungspunkt der Heizeinheit 24.1 nachgeschaltet ist.

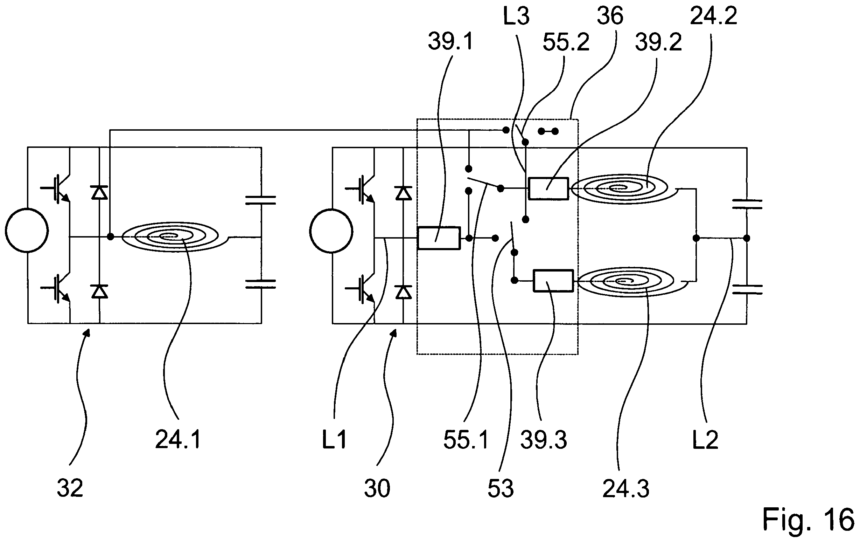

In Figur 16 ist eine weitere Ausführung gezeigt. Diese unterscheidet sich von der Ausführung gemäß Figur 14 durch eine andersartige Funktionalität des Schaltmittels 53 sowie durch ein zusätzliches Schaltmittel. Das Schaltmittel 55 der Figur 14 wird in Figur 16 mit dem Bezugszeichen 55.1 bezeichnet, während das zusätzliche Schaltmittel mit dem Bezugszeichen 55.2 bezeichnet ist. Das Schaltmittel 53 dient dazu, zwischen einer ersten Konfiguration, in welcher die Heizeinheit 24.3 mit der zentralen Leitung L1 verbunden ist, und einer zweiten Konfiguration umzuschalten, in welcher die Heizeinheit 24.3 mit einer Verbindungsleitung L3 verbunden ist. Diese Verbindungsleitung L3 verbindet das Schaltmittel 53 mit dem Schaltmittel 55.2. Dieses ermöglicht wahlweise eine Verbindung der Leitung L3 zur Leistungseinheit 32. Durch ein Zusammenwirken der Schaltmittel 53 und 55.2 sind drei Konfigurationen möglich: die Heizeinheit 24.3 ist über die zentrale Leitung L1 mit der Leistungseinheit 30 verbunden; die Heizeinheit 24.3 ist von beiden Leistungseinheiten 30, 32 getrennt und hierdurch ausgeschaltet; die Heizeinheit 24 ist über die Verbindungsleitung L3 und das Schaltmittel 55.2 mit der Leistungseinheit 32 verbunden. Mit der gezeigten Topologie können beide Heizeinheiten 24.2 und 24.3 wahlweise mit der Leistungseinheit 30 oder mit der Leistungseinheit 32 verbunden werden.

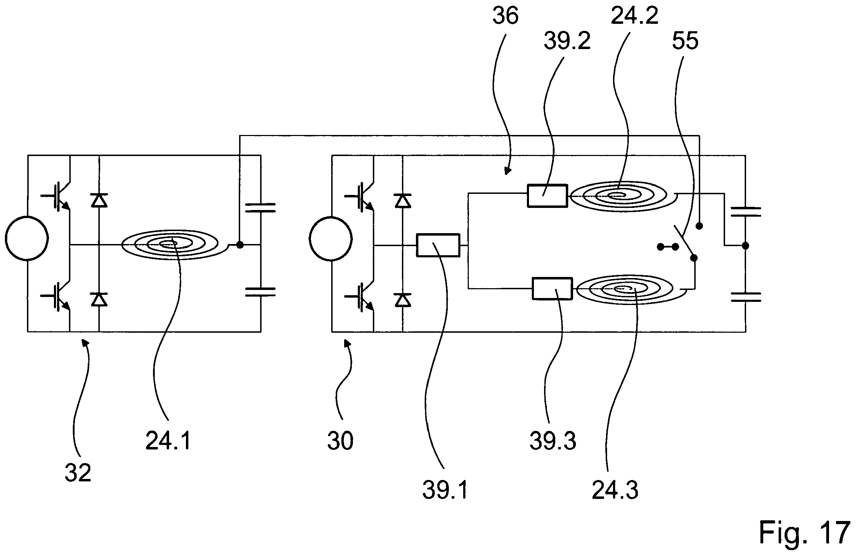

Figur 17 zeigt eine weitere Ausführung. Hierbei weist die Differenziereinheit 36 ein einziges Schaltmittel 55 auf, das der Heizeinheit 24.3 nachgeschaltet ist. Durch das Schaltmittel 55 kann die Heizeinheit 24.3 entweder ausgeschaltet werden, oder sie kann über eine Leitung, die an einem der Heizeinheit 24.1 nachgeschalteten Abzweigungspunkt vom Brückenzweig der Heizeinheit 24.1 abgezweigt ist, mit dieser Heizeinheit 24.1 verbunden werden. Die Heizeinheit 24.2 ist permanent mit der Leistungseinheit 30 verbunden.

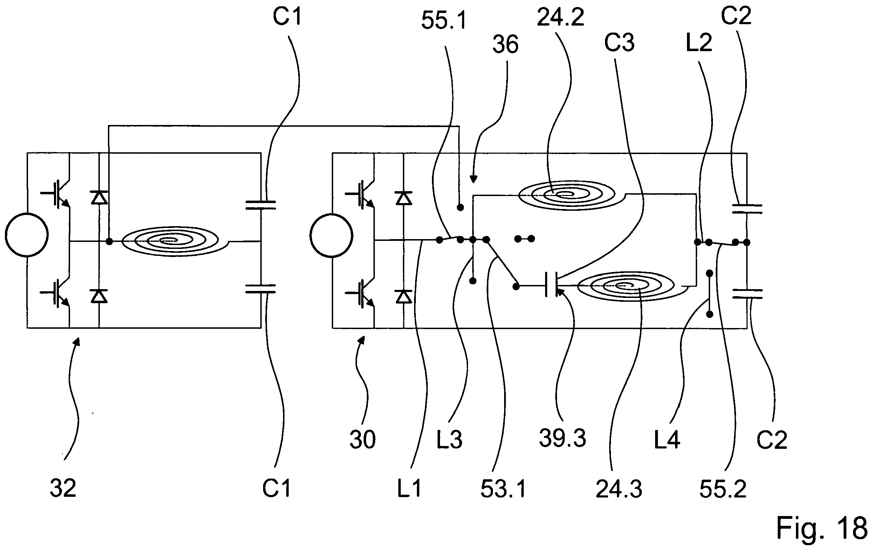

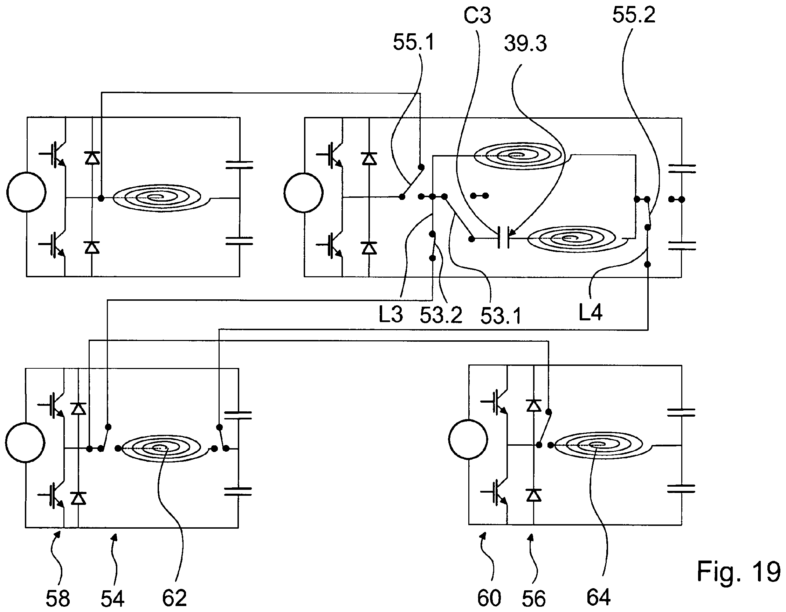

Eine weitere alternative Ausführung ist in Figur 18 gezeigt. Die Differenziereinheit 36 weist ein als Kondensator C3 ausgebildetes Differenziermittel 39.3 auf, das in der der Heizeinheit 24.3 zugeordneten Verzweigung angeordnet ist. Insbesondere ist das Differenziermittel 39.3 der Heizeinheit 24.3 vorgeschaltet. In dieser Verzweigung ist ferner ein Schaltmittel 53.1 angeordnet, mittels dessen die Heizeinheit 24.3 mit der zentralen Leitung L1 bei der Ausführung eines differenzierten Heizmodus verbunden ist oder von der zentralen Leitung L1 getrennt werden kann. In dieser zentralen Leitung L1 ist ein weiteres Schaltmittel 55.1 angeordnet. Durch dieses Schaltmittel 55.1 können eine erste Konfiguration, in welcher die parallelen Verzweigungen der Heizeinheiten 24.2, 24.3 mit der Leistungseinheit 30 verbunden sind, und eine zweite Konfiguration erreicht werden, in welcher die Heizeinheit 24.1 mit den Leistungseinheiten 30 und 32 verbunden ist und durch diese mit Leistung versorgt werden kann. Von der zentralen Leitung L1 abgezweigt ist eine Verbindungsleitung L3, mittels welcher über ein in der Leitung L3 angeordnetes und in Figur 19 gezeigtes Schaltmittel 53.2 eine Verbindung zu einer in Figur 19 gezeigten Schaltung 54 hergestellt werden kann. In der zentralen Leitung L2 ist ebenfalls ein Schaltmittel 55.2 angeordnet. Wahlweise können die Heizeinheiten 24.2, 24.3 mittels des Schaltmittels 55.2 entweder mit dem die Kondensatoren C2 aufweisenden Kondensatorzweig oder mit einer weiteren Verbindungsleitung L4 verbunden werden, mittels welcher eine Verbindung zu einer in Figur 19 gezeigten Schaltung 54 hergestellt werden kann, wie in Figur 19 gezeigt ist.

Figur 18 zeigt die Schaltung in einem differenzierten Heizmodus mit den sämtlichen Heizeinheiten 24.1 bis 24.3, wobei dieser Heizmodus als so genannter "nominaler" Heizmodus ausgebildet ist, in welchem die an die Heizeinheiten 24 abgegebenen Leistungen durch die nominalen Leistungen der Leistungseinheiten 30, 32 begrenzt sind. In diesem Heizmodus sind die Heizeinheiten 24.2, 24.3 mittels der gezeigten Konfiguration der Schaltmittel 53.1, 53.2, 55.1, 55.2 von der Leistungseinheit 30 in einer gewöhnlichen Brückenkonfiguration mit Leistung versorgt, wobei die Teilschaltungen mit den Leistungseinheiten 30, 32 voneinander getrennt sind.

Figur 19 zeigt die Schaltung sowie zwei weitere Schaltungen 54, 56 in der Ausführung eines differenzierten Heizmodus mit den sämtlichen Heizeinheiten 24.1 bis 24.3, wobei dieser Heizmodus als so genannter "Superboost"-Heizmodus ausgebildet ist. In diesem Heizmodus sind die Heizeinheiten 24.2, 24.3 mit weiteren Leistungseinheiten 58, 60 der Schaltungen 54, 56 verbunden, während zur Versorgung der Heizeinheit 24.1 beide Leistungseinheiten 30, 32 herangezogen werden. Dadurch kann in diesem Heizmodus eine höhere Leistung als im nominalen Heizmodus erreicht werden. Die Schaltungen 54, 56 weisen weitere Heizeinheiten 62, 64, die bei der Ausführung des "Superboost"-Heizmodus ungenutzt sind, sowie Leistungseinheiten 58, 60 zur Versorgung dieser Heizeinheiten 62, 64 auf, wobei im "Superboost"-Heizmodus die Heizeinheiten 62, 64 von deren jeweils zugeordneter Leistungseinheit 58 bzw. 60 mittels Schaltmitteln getrennt werden und diese Leistungseinheiten 58, 60 zur Versorgung der Heizeinheiten 24.2, 24.3 dienen.

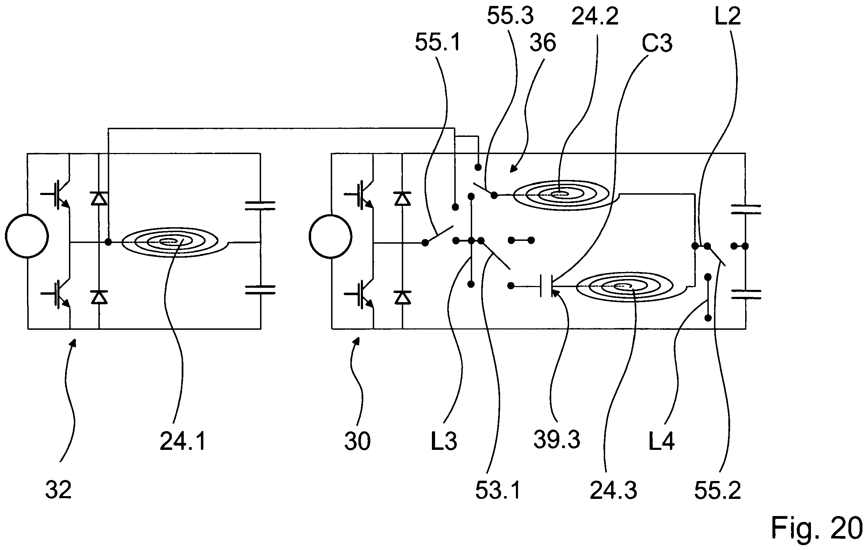

Eine Variante der Ausführung aus Figur 18 ist in Figur 20 gezeigt. Im Vergleich zur Ausführung gemäß Figur 18 ist ein weiteres Schaltmittel 55.3 in der der Heizeinheit 24.2 zugeordneten Verzweigung der Heizeinheit 24.2 vorgeschaltet angeordnet. Dieses verbindet wahlweise die Heizeinheit 24.2 mit der zentralen Leitung L1 oder verbindet die Heizeinheit 24.2 mit der Leistungseinheit 32 über eine im Brückenzweig der Heizeinheit 24.1 vor der Heizeinheit 24.1 abgezweigte Leitung. Mit dieser Schaltung können, wie oben beschrieben, ein "nominaler" und ein "Superboost"-Heizmodus ausgeführt werden.

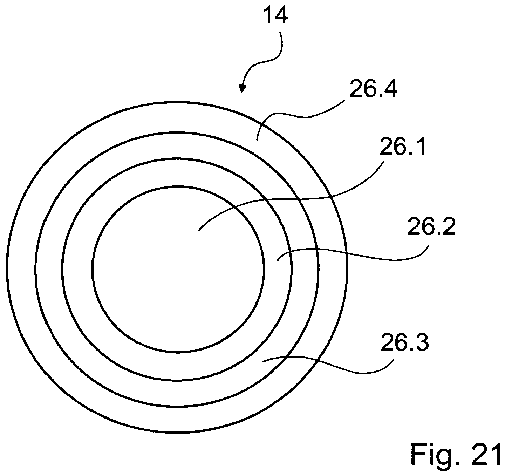

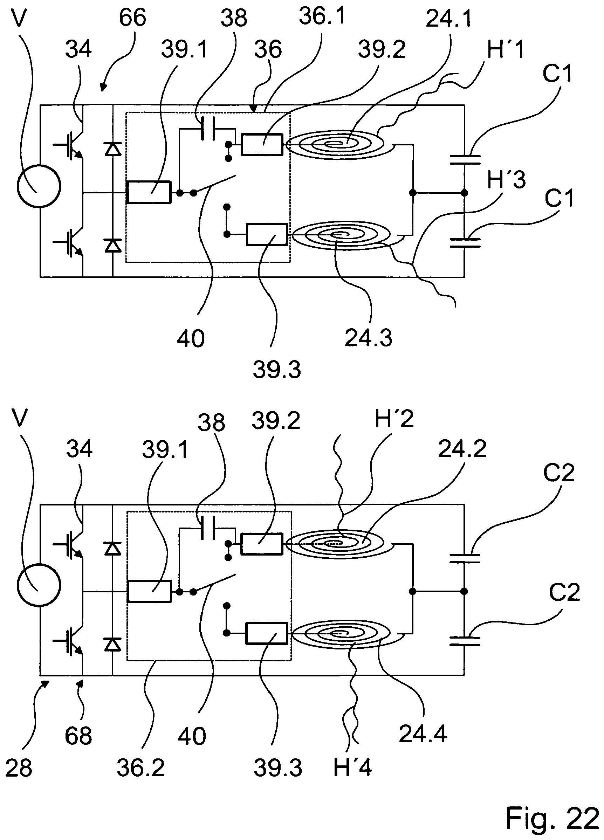

In Figur 21 ist eine alternative Ausführungsvariante der Kochzone 14 dargestellt. Diese umfasst die oben beschriebenen konzentrischen Kochbereiche 26.1 bis 26.3. Zusätzlich weist die Kochzone 14 einen weiteren Kochbereich 26.4 auf, welcher konzentrisch zu den anderen Kochbereichen 26.1 bis 26.3 ist und diese umschließt. Dieser Kochbereich 26.4 bedeckt eine in Figur 21 nicht näher dargestellte Heizeinheit 24.4, die unterhalb der Kochplatte 12 die weiteren Heizeinheiten 24.1 bis 24.3 umschließt. In dieser Ausführung ist die Heizeinheit 24.4 als äußerste Heizeinheit ausgebildet und die Heizeinheiten 24.2 und 24.3 werden als intermediäre Heizeinheiten betrachtet. Verschiedene Ausführungen von diese Heizeinheiten 24.1 bis 24.4 einschließenden Schaltungen sind in den Figuren 22 bis 25 dargestellt.

Figur 22 zeigt eine erste Ausführung einer Schaltung, die die Heizeinheiten 24.1 bis 24.4 aufweist. Diesen sind zwei Leistungseinheiten 66, 68, die die Leistungsvorrichtung 28 bilden, zugeordnet. In dieser Ausführung sind voneinander beabstandete Heizeinheiten einer gemeinsamen Leistungseinheit zugeordnet: Die zentrale Heizeinheit 24.1 und die intermediäre Heizeinheit 24.3 werden von der Leistungseinheit 66 mit Leistung versorgt, während die intermediäre Heizeinheit 24.2 und die äußerste Heizeinheit 24.4 von der Leistungseinheit 68 mit Leistung versorgt werden. Die Leistungseinheiten 66, 68 weisen jeweils ein Paar von Schaltelementen 34 auf. Die Teilschaltung, die die Leistungseinheit 66 und die Heizeinheiten 24.1, 24.3 umfasst, weist eine Topologie auf, die der Ausführung der den Heizeinheiten 24.2, 24.3 zugeordneten Teilschaltung gemäß Figur 3 entspricht. Hierbei sind die Heizeinheiten 24.1, 24.3 in einem Brückenzweig angeordnet, der sich an einen Kondensatorzweig mit zwei Kondensatoren C1 anschließt. Die andere Teilschaltung, die die Leistungseinheit 68 und die Heizeinheit 24.2, 24.4 umfasst, weist eine identische Topologie auf. Die Werte der Funktionsbausteine in den Teilschaltungen können identisch oder unterschiedlich sein. Die Leistungsvorrichtung 28 weist eine Differenziereinheit 36 auf. Diese ist auf zwei Teildifferenziereinheiten 36.1, 36.2 verteilt. Diese Teildifferenziereinheiten 36.1, 36.2 sind jeweils in einem Brückenzweig der Teilschaltungen angeordnet und entsprechen jeweils in ihrer Ausführung der Topologie der Differenziereinheit 36 aus Figur 3.

Mittels der Differenziereinheit 36, basierend auf dem Funktionsprinzip der Teildifferenziereinheiten 36.1, 36.2, das hier nicht wiederholt wird, können zwei differenzierte Heizmodi erreicht werden. Ein erster differenzierter Heizmodus mit drei Heizeinheiten 24.1, 24.2, 24.3 kann betrieben werden, in welchem die zentrale Heizeinheit 24.1 und die innerste intermediäre Heizeinheit 24.2 mit einer Heizleistung H'1 bzw. H'2 betrieben werden und die äußerste intermediäre Heizeinheit 24.3 mit einer Heizleistung H'3 betrieben wird, die größer ist als die Heizleistungen H'1, H'2. Diese Leistungen H'1, H'2 können identisch sein oder voneinander unterschiedlich sein. Dies ist durch die Dimensionierung der Differenziermittel 39.1 bis 39.3 in den jeweiligen Teildifferenziereinheiten 36.1, 36.2 bedingt. In diesem ersten differenzierten Heizmodus verbleibt die äußerste Heizeinheit 24.4 durch eine entsprechende Konfiguration des Schaltmittels 40 der Teildifferenziereinheit 36.2 ausgeschaltet. Es kann ferner ein weiterer differenzierter Heizmodus mit vier Heizeinheiten 24.1 bis 24.4 betrieben werden. Hierzu wird das Schaltmittel 40 der Teildifferenziereinheit 36.2 betätigt, so dass die äußerste Heizeinheit 24.4 mit der Leistungseinheit 68 verbunden wird. In diesem differenzierten Heizmodus wird die Heizeinheit 24.4 mit einer Heizleistung H'4 betrieben, die größer ist als die Heizleistungen H'1, H'2. Die Heizleistungen H'3 und H'4 können identisch oder voneinander unterschiedlich sein. Dies ist durch die Wahl der Dimensionierung der Differenziermittel 39.1 bis 39.3 in den jeweiligen Teildifferenziereinheiten 36.1, 36.2 bedingt. Beispielsweise können die Werte der Funktionsbausteine der Teildifferenziereinheiten 36.1, 36.2 in den Teilschaltungen identisch sein, während die Werte der Kondensatoren C1 und C2 in den Teilschaltungen vorteilhaft unterschiedlich sind. Das Einschalten der äußersten Heizeinheit 24.4 erfolgt wie für die Heizeinheit 24.3 mittels eines nicht näher dargestellten Sensormittels zum Erfassen eines Bedeckungszustands der Heizeinheit 24.4 und im Zusammenwirken mit der Sensoreinheit 50, die das Schaltmittel 40 der Teildifferenziereinheit 36.2 betätigt.

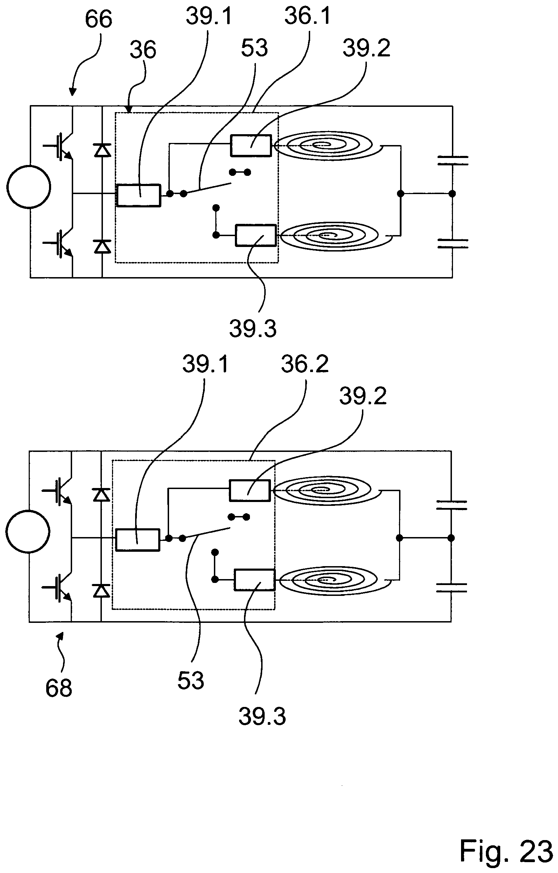

Die in den Figuren 23 bis 25 gezeigten Schaltungen unterscheiden sich von der in Figur 22 gezeigten Ausführung durch die Ausführung der Teildifferenziereinheiten 36.1, 36.2.

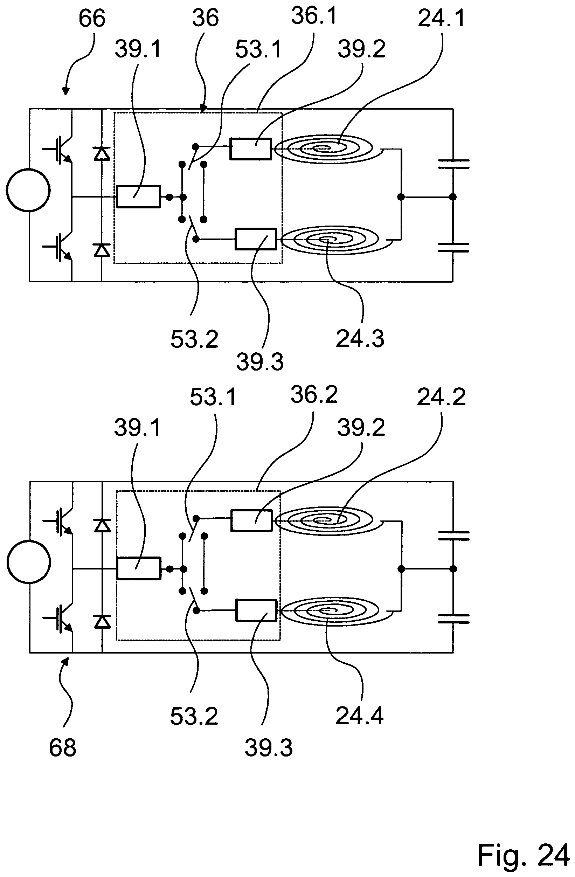

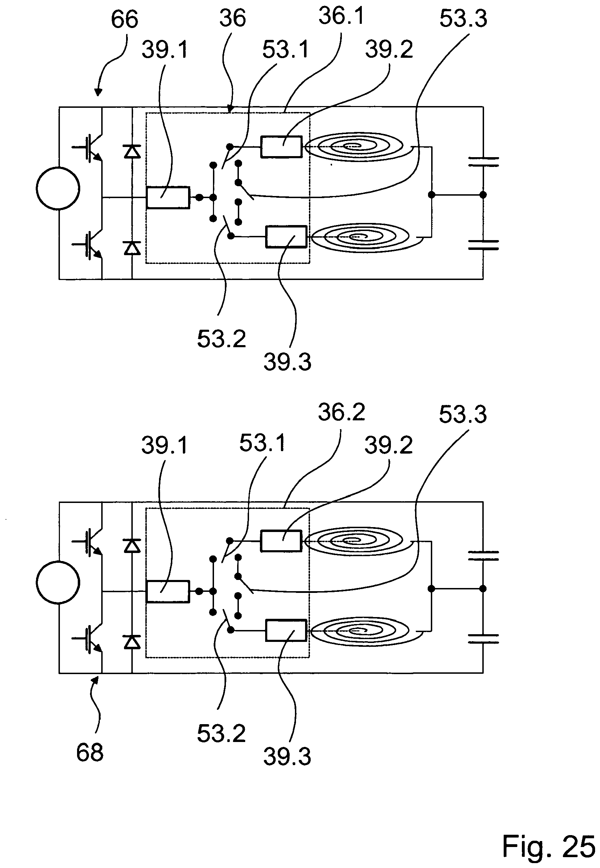

In Figur 23 sind die Teilschaltungen mit einer Teildifferenziereinheit 36.1, 36.2 versehen, die der Ausführung der Differenziereinheit 36 gemäß Figur 11 entspricht. In Figur 24 sind die Teildifferenziereinheiten 36.1, 36.2 gemäß der Ausführung aus Figur 12 ausgebildet, während das Einsetzen von Teildifferenziereinheiten 36.1, 36.2 gemäß der Ausführung aus Figur 13 in Figur 25 gezeigt ist.

### Bezugszeichen

- 10: Kochvorrichtung
- 12: Kochplatte
- 14: Kochzone
- 16: Kochzone
- 18: Kochzone
- 20: Kochzone
- 22: Bedieneinheit
- 24: Heizeinheit
- 26: Kochbereich
- 28: Leistungsvorrichtung
- 30: Leistungseinheit
- 32: Leistungseinheit
- 34: Schaltelement
- 36: Differenziereinheit
- 36.1: Teildifferenziereinheit
- 36.2: Teildifferenziereinheit
- 38: Differenziermittel
- 39: Differenziermittel
- 40: Schaltmittel
- 42: Abzweigung
- 44: Kondensator
- 46: Zubereitungsgeschirr
- 48: Zubereitungsgeschirr
- 50: Steuereinheit
- 52: Sensormittel
- 53: Schaltmittel

- 54: Schaltung
- 55: Schaltmittel
- 56: Schaltung
- 58: Leistungseinheit
- 60: Leistungseinheit
- 62: Heizeinheit
- 64: Heizeinheit
- 66: Leistungseinheit
- 68: Leistungseinheit
- H1: Heizleistung
- H'1: Heizleistung
- H2: Heizleistung
- H'2: Heizleistung
- H'3: Heizleistung
- H'4: Heizleistung
- L1, L2: Zentrale Leitung
- L3, L4: Verbindungsleitung
- C1,: Kondensator

## Patentansprüche

1. Kochvorrichtung mit zumindest zwei Heizeinheiten (24.1, 24.2, 24.3; 24.4), die im Zusammenwirken eine zusammenhängende Kochzone (14) einer Kochplatte (12) festlegen, und einer Leistungsvorrichtung (28), die zur Leistungsversorgung der Heizeinheiten (24.1, 24.2, 24.3; 24.4) vorgesehen ist, wobei die Leistungsvorrichtung (28) eine Differenziereinheit (36) aufweist, die dazu vorgesehen ist, in einem differenzierten Heizmodus mit zumindest zwei Heizeinheiten (24.2, 24.3) eine erste positive Heizleistung (H'2) für eine erste Heizeinheit (24.2) von einer zweiten positiven Heizleistung (H'3) für eine zweite Heizeinheit (24.3) zu differenzieren, wobei die Leistungsvorrichtung (28) eine erste Leistungseinheit (30; 66) zur Versorgung von zumindest zwei Heizeinheiten (24.2, 24.3; 24.2, 24.4) und eine von der ersten Leistungseinheit (30) unterschiedliche zweite Leistungseinheit (32; 68) aufweist, die zur Versorgung von zumindest einer dritten Heizeinheit (24.1; 24.3) vorgesehen ist, und die erste Leistungseinheit (30; 66) dazu vorgesehen ist, im differenzierten Heizmodus zumindest zwei Heizeinheiten (24.2, 24.3; 24.2, 24.4) mittels der Differenziereinheit (36) mit differenzierten positiven Heizleistungen (H'2, H'3; H'2, H'4) zu versorgen.

2. Kochvorrichtung nach Anspruch 1, **dadurch gekennzeichnet, dass** zumindest drei Heizeinheiten (24.1, 24.2, 24.3) vorgesehen sind und der differenzierte Heizmodus ein Heizmodus mit zumindest drei Heizeinheiten (24.1, 24.2, 24.3) ist.

3. Kochvorrichtung nach Anspruch 1 oder 2, **dadurch gekennzeichnet, dass** zumindest drei zueinander konzentrisch angeordnete Heizeinheiten (24.1, 24.2, 24.3; 24.4) vorgesehen sind und die Differenziereinheit (36) dazu vorgesehen ist, im differenzierten Heizmodus eine erste positive Heizleistung (H'2) für eine erste äußere Heizeinheit (24.2) von einer zweiten positiven Heizleistung (H'3; H'4) für eine zweite äußere Heizeinheit (24.3; 24.4) zu differenzieren.

4. Kochvorrichtung nach Anspruch 3, **dadurch gekennzeichnet, dass** die Leistungsvorrichtung (28) dazu vorgesehen ist, mittels der Differenziereinheit (36) eine intermediäre Heizeinheit (24.2) mit einer kleinsten positiven Heizleistung (H'2) zu versorgen.

5. Kochvorrichtung nach einem der vorhergehenden Ansprüche, **dadurch gekennzeichnet, dass** die erste Leistungseinheit (30; 66) zur simultanen Versorgung von zumindest zwei Heizeinheiten (24.2, 24.3; 24.2, 24.4) vorgesehen ist.

6. Kochvorrichtung nach einem der vorhergehenden Ansprüche, **dadurch gekennzeichnet, dass** zumindest drei zueinander konzentrisch angeordnete Heizeinheiten (24.1, 24.2, 24.3; 24.4) vorgesehen sind und die erste Leistungseinheit (30; 66) zur Versorgung von zumindest zwei äußeren Heizeinheiten (24.2, 24.3; 24.2, 24.4) vorgesehen ist.

7. Kochvorrichtung nach einem der vorhergehenden Ansprüche, **dadurch gekennzeichnet, dass** die Differenziereinheit (36) zumindest ein Schaltmittel (55) aufweist, das dazu vorgesehen ist, im differenzierten Heizmodus zumindest eine der Heizeinheiten (24.2) wahlweise mit der ersten oder mit der zweiten Leistungseinheit (30, 32) zu verbinden.

8. Kochvorrichtung nach einem der vorhergehenden Ansprüche, **dadurch gekennzeichnet, dass** die Differenziereinheit (36) ein Differenziermittel (38, 39.1, 39.2, 39.3) aufweist, das dazu vorgesehen ist, ein zumindest im differenzierten Heizmodus festes Verhältnis zwischen der ersten und der zweiten Heizleistung (H'2, H'3) vorzugeben.

9. Kochvorrichtung nach einem der vorhergehenden Ansprüche, **dadurch gekennzeichnet, dass** die Differenziereinheit (36) zumindest ein Differenziermittel (38; 39.1; 39.3) aufweist, das als Kondensator (C_{med}; C3) ausgebildet ist.

10. Kochvorrichtung nach einem der vorhergehenden Ansprüche, **dadurch gekennzeichnet, dass** die Differenziereinheit (36) ein Differenziermittel (38; 39.3) aufweist, das zumindest im differenzierten Heizmodus in Reihe mit zumindest einer Heizeinheit (24.2; 24.3) geschaltet ist.

11. Kochvorrichtung nach einem der vorhergehenden Ansprüche, **dadurch gekennzeichnet, dass** die Differenziereinheit (36) ein Differenziermittel (38) und ein Schaltmittel (40) aufweist, das zu einem Ein- und Ausschalten des Differenziermittels (38) vorgesehen ist.

12. Kochvorrichtung nach Anspruch 11, **dadurch gekennzeichnet, dass** das Differenziermittel (38) in einer Abzweigung (42) angeordnet ist, die das Schaltmittel (40) überbrückt.

13. Kochvorrichtung nach Anspruch 11 oder 12, **dadurch gekennzeichnet, dass** die Differenziereinheit (36) zumindest ein weiteres Differenziermittel (39.1) aufweist, das dem Schaltmittel (40) vorgeschaltet ist.

## Claims

1. Cooking device with at least two heating units (24.1, 24.2, 24.3; 24.4) which interact to form a contiguous cooking zone (14) of a cooktop (12), and a power device (28) which is provided for supplying power to the heating units (24.1, 24.2, 24.3; 24.4), wherein the power device (28) has a differentiation unit (36) which is provided, in a differentiated heating mode with at least two heating units (24.2, 24.3), to differentiate between a first positive heating power (H'2) for a first heating unit (24.2) and a second positive heating power (H'3) for a second heating unit (24.3), wherein the power device (28) has a first power unit (30; 66) for supplying at least two heating units (24.2, 24.3; 24.2, 24.4) and a second power unit (32; 68) different from the first power unit (30), which is provided for supplying at least a third heating unit (24.1; 24.3), and the first power unit (30; 66) is provided, in the differentiated heating mode, for supplying at least two heating units (24.2, 24.3; 24.2, 24.4) by means of the differentiation unit (36) with differentiated positive heating powers (H'2, H'3; H'2, H'4).

2. Cooking device according to claim 1, **characterised in that** at least three heating units (24.1, 24.2, 24.3) are provided and the differentiated heating mode is a heating mode with a least three heating units (24.1, 24.2, 24.3).

3. Cooking device according to claim 1 or 2, **characterised in that** at least three heating units (24.1, 24.2, 24.3; 24.4) arranged concentrically in relation to one another are provided and the differentiation unit (36) is provided, in the differentiated heating mode, to differentiate between a first positive heating power (H'2) for a first outer heating unit (24.2) and a second positive heating power (H'3; H'4) for a second outer heating unit (24.3; 24.4).

4. Cooking device according to claim 3, **characterised in that** the power device (28) is provided, by means of the differentiation unit (36), to supply an intermediate heating unit (24.2) with a smallest positive heating power (H'2).

5. Cooking device according to one of the preceding claims, **characterised in that** the first power unit (30; 66) is provided for simultaneous supply of that least two heating units (24.2, 24.3; 24.2, 24.4).

6. Cooking device according to one of the preceding claims, **characterised in that** at least three heating units (24.1, 24.2, 24.3; 24.4) arranged concentrically in relation to each other are provided and the first power unit (30; 66) is provided for supplying at least two outer heating units (24.2, 24.3; 24.2, 24.4).

7. Cooking device according to one of the preceding claims, **characterised in that** the differentiation unit (36) has at least one switching means (55) which is provided, in the differentiated heating mode, for connecting at least one of the heating units (24.2) optionally to the first or to the second power unit (30, 32).

8. Cooking device according to one of the preceding claims, **characterised in that** the differentiation unit (36) has a differentiation means (38, 39.1, 39.2, 39.3) which is provided for predetermining a fixed ratio, at least in the differentiated heating mode, between the first and the second heating power (H'2, H'3).

9. Cooking device according to one of the preceding claims; **characterised in that** the differentiation unit (36) has at least one differentiation means (38; 39.1; 39.3) which is embodied as a capacitor (C_{med}; C3).

10. Cooking device according to one of the preceding claims, **characterised in that** the differentiation unit (36) has a differentiation means (38; 39.3) which, at least in the differentiated heating mode, is connected in series with at least one heating unit (24.2; 24.3).

11. Cooking device according to one of the preceding claims, **characterised in that** the differentiation unit (36) has a differentiation means (38) and a switching means (40) which is provided for switching the differentiation means (38) on and off.

12. Cooking device according to claim 11, **characterised in that** the differentiation means (38) is arranged in a branch (42) which bridges the switching means (40).

13. Cooking device according to claim 11 or 12, **characterised in that** the differentiation unit (36) has at least one further differentiation means (39.1) which is connected upstream of the switching means (40).

## Revendications

1. Dispositif de cuisson comprenant au moins deux unités de chauffe (24.1, 24.2, 24.3 ; 24.4) qui, en coopérant, déterminent une zone de cuisson homogène (14) d'une plaque de cuisson (12), et un dispositif de puissance (28) qui est ménagé pour l'alimentation en puissance des unités de chauffe (24.1, 24.2, 24.3 ; 24.4), dans lequel, le dispositif de puissance (28) présente une unité de différenciation (36) qui est ménagée pour différencier, dans un mode de chauffe différencié avec au moins deux unités de chauffe (24.2, 24.3), une première puissance de chauffe positive (H'2) pour une première unité de chauffe (24.2) d'une deuxième puissance de chauffe positive (H'3) pour une deuxième unité de chauffe (24.3) dans lequel le dispositif de puissance (28) présente une première unité de puissance (30 ; 66) pour l'alimentation d'au moins deux unités de chauffe (24.2, 24.3 ; 24.2, 24.4) et une deuxième unité de puissance (32, 68) différente de la première unité de puissance (30), laquelle est ménagée pour l'alimentation d'au moins une troisième unité de chauffe (24.1, 24.3) et dans lequel la première unité de puissance (30 ; 66) est ménagée, en mode de chauffe différencié, pour alimenter au moins deux unités de chauffe (24.2, 24.3 ; 24.2 ; 24.4), au moyen de l'unité de différenciation (36) avec des puissances de chauffe positives différenciées (H'2, H'3 ; H'2, H'4).

2. Dispositif de cuisson selon la revendication 1, **caractérisé en ce qu'**au moins trois unités de chauffe (24.1, 24.2, 24.3) sont ménagées et **en ce que** le mode de chauffe différencié est un mode de chauffe avec au moins trois unités de chauffe (24.1, 24.2, 24.3).

3. Dispositif de cuisson selon la revendication 1 ou 2, **caractérisé en ce qu'**au moins trois unités de chauffe (24.1, 24.2, 24.3) disposées concentriquement les unes par rapport aux autres sont ménagées et **en ce que** l'unité de différenciation (36) est ménagée pour différencier, en mode de chauffe différencié, une première puissance de chauffe positive (H'2) pour une première unité de chauffe extérieure (24.2) d'une deuxième puissance de chauffe positive (H'3 ; H'4) pour une deuxième unité de chauffe extérieure (24.3 ; 24.4).

4. Dispositif de cuisson selon la revendication 3, **caractérisé en ce que** le dispositif de puissance (28) est ménagé pour alimenter, au moyen de l'unité de différenciation (36), une unité de chauffe intermédiaire (24.2) avec une puissance de chauffe positive la plus petite.

5. Dispositif de cuisson selon l'une quelconque des revendications précédentes, **caractérisé en ce que** la première unité de puissance (30 ; 66) est ménagée pour l'alimentation simultanée d'au moins deux unités de chauffe (24.2, 24.3 ; 24.2, 24.4).

6. Dispositif de cuisson selon l'une des revendications précédentes, **caractérisé en ce qu'**au moins trois unités de chauffe (24.1, 24.2, 24.3 ; 24.4) disposées concentriquement les unes par rapport aux autres sont ménagées et **en ce que** la première unité de puissance (30 ; 66) est ménagée pour l'alimentation d'au moins deux unités de chauffe extérieures (24.2, 24.3 ; 24.2, 24.4).

7. Dispositif de cuisson selon l'une quelconque des revendications précédentes, **caractérisé en ce que** l'unité de différenciation (36) présente au moins un moyen de commutation (55) qui est ménagé, en mode de chauffe différencié, pour connecter au moins une des unités de chauffe (24.2) de manière sélective avec la première ou avec la deuxième unité de puissance (30, 32).

8. Dispositif de cuisson selon l'une quelconque des revendications précédentes, **caractérisé en ce que** l'unité de différenciation (36) présente un moyen de différenciation (38, 39.1, 39.2, 39.3) qui est ménagé pour indiquer un rapport fixe, au moins en mode de chauffe différencié, entre la première et la deuxième puissance s de chauffe (H'2, H'3).

9. Dispositif de cuisson selon l'une quelconque des revendications précédentes, **caractérisé en ce que** l'unité de différenciation (36) présente un moyen de différenciation (38, 39.1, 39.3) qui est réalisé en tant que condensateur (C_{med} ; C3).

10. Dispositif de cuisson selon l'une quelconque des revendications précédentes, **caractérisé en ce que** l'unité de différenciation (36) présente un moyen de différenciation (38, 39.3) qui, au moins en mode de chauffe différencié, est connecté en série avec au moins une unité de chauffe (24.2, 24.3).

11. Dispositif de cuisson selon l'une quelconque des revendications précédentes, **caractérisé en ce que** l'unité de différenciation (36) présente un moyen de différenciation (38) et un moyen de commutation (40) qui est ménagé pour une mise en fonction et une mise hors fonction du moyen de différenciation (38).

12. Dispositif de cuisson selon la revendication 11, **caractérisé en ce que** le moyen de différenciation (38) est disposé dans un branchement (42) qui ponte le moyen de commutation (40).

13. Dispositif de cuisson selon la revendication 11 ou 12, **caractérisé en ce que** le moyen de différenciation (36) présente au moins un moyen de différenciation supplémentaire (39.1) qui est installé en amont du moyen de commutation (40).
